# EUROPEAN PATENT APPLICATION

(11) **EP 4 679 212 A1**
(43) Date of publication of application: **14.01.2026**
(21) Application number: 24766477.4
(22) Date of filing: 06.03.2024
(51) Int. Cl.: G05B 23/02

(54) **TEST SYSTEM**

(30) Priority: 06.03.2023 CN 202310214698; 01.09.2023 CN 202311125925; 01.09.2023 CN 202311128871; 01.09.2023 CN 202311125989; 27.10.2023 CN 202311414737; 19.01.2024 CN 202410081374
(71) Applicant: Kunyi Electronics Technology (Shanghai) Co., Ltd., Shanghai 201403 (CN)
(72) Inventor: LI, Kang, Shanghai 201403 (CN); BAI, Riguang, Shanghai 201403 (CN); CHEN, Zhongming, Shanghai 201403 (CN); CHEN, Qi, Shanghai 201403 (CN)
(74) Representative: Herrero & Asociados, S.L.
(86) International application number: PCT/CN2024/080367
(87) International publication number: WO 2024/183762

(57) **Abstract**

A test system, relating to the technical field of testing. The test system comprises: at least one I/O unit and a plurality of devices. The plurality of devices comprise a real-time calculation device and an I/O processing device; the I/O processing device is connected to the at least one I/O unit; and the I/O unit is used for being directly or indirectly connected to a DUT. When testing the DUT, target data required to be shared among the devices is shared based on writing and reading data into and from a memory by the devices. The I/O processing device is used to transmit data between the device and the I/O unit connected to the I/O processing device. The sharing of the data required to be shared among devices is achieved on the basis of the reading and writing of data into and from the memory by the devices, so as to maintain data consistency among the devices.

## Description

### Technical Field

This application relates to the field of testing technology, and specifically to a test system.

### Background

In vehicles such as automobiles and new energy vehicles, the electronic and electrical architecture of the vehicle is becoming more and more complex. Compared with the past, there is an order of magnitude change in the number of electronic control units (ECUs), data bandwidth, and processing capabilities of CPU and GPU.

Hardware-in-the-Loop (HIL) testing can verify the functions of various domain controllers, ECUs, CPUs and other controllers in the vehicle in advance to shorten the development cycle of the controller.

In the existing HIL test system, devices with data storage and processing capabilities (e.g., real-time computers, or called as industrial-personal-computers (IPCs), Real time Parameter Controls, RTPC) and I/O card in the HIL test system are used to execute testing tasks to complete the test of the device under testing (DUT). Generally speaking, in HIL systems, regardless of what devices are integrated, data sharing between different devices is achieved through Ethernet, which is inefficient and affects testing results.

### Summary of The Invention

The purpose of this application is to provide a test system in which the data required to be shared among devices is achieved on the basis of the writing and reading of data into and from a memory by the devices, improving data sharing efficiency and ensuring synchronization.

To achieve the above objectives, the present application provides a test system comprising: at least one I/O unit and a plurality of devices; the plurality of devices comprise a real-time calculation device and an I/O processing device; the I/O processing device is connected to the at least one I/O unit, and the I/O unit is used for being directly or indirectly connected to a DUT; when testing the DUT, target data required to be shared among devices is shared based on writing and reading data into and from a memory by the devices; the I/O processing device is used for transmitting data between the device and the I/O unit connected to the I/O processing device.

### Brief Description of The Drawings

FIG.1 is a block diagram of a test system according to a first embodiment of the present application;
FIG.2 is a block diagram of a test system according to the first embodiment of the present application, wherein the target memory configured in the device is a distributed memory in a distributed memory access module;
FIG.3 is a schematic diagram of a configuration method of a data sharing space and a lock space in a target memory according to the first embodiment of the present application;
FIG.4 is a schematic diagram of the information to be verified being written into an operation request according to the first embodiment of the present application, wherein each second target device in the system generates the information to be verified according to all data frames of data that has been written into the operation request;
FIG.5 is a schematic diagram of the information to be verified being written into an operation request according to the first embodiment of the present application, wherein the last device in the system generates information to be verified according to all data frames of data that has been written into the operation request;
FIG.6 is a block diagram of a test system being a HIL system according to the first embodiment of the present application;
FIG.7 is a block diagram of a test system according to a second embodiment of the present application;
FIG.8 is a schematic diagram of a test system being a HIL system according to a second embodiment of the present application;
FIG.9 is a schematic diagram of a test system being a HIL system according to a second embodiment of the present application, wherein there are a plurality of control modules, and each control module is connected to corresponding I/O units in a cascade manner;
FIG.10 is a schematic diagram of a test system being a HIL system according to a second embodiment of the present application, wherein there are a plurality of control modules, and each control module is directly connected to corresponding I/O units;
FIG.11 is a schematic diagram of a test system according to a second embodiment of the present application, wherein the plurality of devices 1 include at least one real-time calculation device 11 and at least one I/O processing device 12;
FIG.12 is a schematic diagram of a fourth device according to the second embodiment of the present application;
FIG.13 is a schematic diagram of the fourth device in FIG.12, wherein the processing unit 1011 includes: a data transmission unit 10111 and a processing unit 10112;
FIG.14 is a schematic diagram of a test system according to a second embodiment of the present application in which a real-time calculation device 11 shares target data X to an I/O processing device 12;
FIG.15 is a schematic diagram of a test system according to the second embodiment of the present application in which the I/O processing device 12 shares the target data Y to the real-time calculation device 11;
FIG.16 is a schematic diagram of a test system according to a second embodiment of the present application in which a first real-time calculation device sharing target data Z to a second real-time calculation device;
FIG.17 is a schematic diagram of a test system according to the second embodiment of the present application in which an I/O processing device 12 that is not configured with a target memory shares target data K to a real-time calculation device 11;
FIG.18 is a schematic diagram of a test system according to a second embodiment of the present application in which a real-time calculation device 11 shares target data A1 to an I/O processing device 12 through a memory operating unit, wherein the I/O processing device 12 includes: a data transmission unit and a processing unit;
FIG.19 is a schematic diagram of a test system according to a second embodiment of the present application in which an I/O processing device 12 shares target data A2 to a real-time calculation device 11 through a memory operating unit, wherein the I/O processing device 12 includes: a data transmission unit and a processing unit;
FIG.20 is a schematic diagram of a test system according to a second embodiment of the present application in which a real-time calculation device 11 shares data to an I/O processing device 12 through a memory operating unit, wherein the I/O processing device 12 includes an FPGA circuit;
FIG.21 is a schematic diagram of a test system according to a second embodiment of the present application in which an I/O processing device 12 shares data with a real-time calculation device 11 through a memory operating unit, wherein the I/O processing device 12 includes an FPGA circuit;
FIG.22 is a schematic diagram of a test system in the second embodiment of the present application in which a third real-time calculation device shares data to a fourth real-time calculation device through a memory operating unit.

### Detailed Description of Embodiments

Each embodiment of the present application will be described in detail in the following in connection with the accompanying drawings, so that the purposes, features and advantages of the present application can be more clearly understood. The embodiments shown in the accompanying drawings are not intended to be a limitation of the scope of the present application but are merely intended to illustrate the substantive spirit of the technical solution of the present application.

In the following description, for the purpose of explaining the various disclosed embodiments, certain specific details are set forth to provide a thorough understanding of the various disclosed embodiments. However, one skilled in the relevant art will recognize that the embodiments may be practiced without one or more of these specific details. In other instances, well-known devices, structures, and techniques associated with the present application may not be shown or described in detail to avoid unnecessarily obscuring the description of the embodiments.

Unless the context requires otherwise, throughout the specification and claims, the word "comprises" and variations thereof, such as "includes" and "has" should be understood in an open, inclusive sense, that is, to mean "includes, but not limited to".

Reference throughout this specification to "one embodiment" or "an embodiment" means that a particular feature, structure, or characteristic described in connection with the embodiment is included in at least one embodiment. Thus, the appearances of "in one embodiment" or "in an embodiment" in various places throughout this specification are not necessarily all referring to the same embodiment. Additionally, specific features, structures, or characteristics may be combined in any manner in one or more embodiments.

As used in this specification and the appended claims, the singular forms "a" and "the" include plural referents unless the context clearly dictates otherwise. It should be noted that the term "or" is generally used in its sense including "or/and" unless the context clearly dictates otherwise.

In the following description, in order to clearly demonstrate the structure and working mode of this application, many directional words will be used, but "front", "back", "left", "right", "outside", "inside", "outward", "inward", "up", "down" and other words should be understood as convenient terms and should not be understood as limiting terms.

The terms "first", "second", "third", "fourth", etc. (if existing) in this specification, claims and drawings are used to distinguish similar objects and are not necessarily used to describe a particular order or sequence. It should be understood that the terms used in this way are interchangeable where appropriate, so that the embodiments of the invention described herein can be implemented in sequences other than those illustrated or described herein.

The first embodiment of the present application relates to a test system, for example, a HIL (hardware-in-the-loop) test system, which can be used to test ECUs, domain controllers and other DUTs in vehicles (including but not limited to new energy vehicles, fuel vehicles, etc.). Common DUTs for vehicles include vehicle controllers, battery management system controllers, electric drive controllers, body controllers, chassis suspension controllers, assisted driving controllers, etc. Test items include but are not limited to operation stability tests and control algorithm tests in various scenarios.

The test system includes: at least one I/O unit and a plurality of devices; the plurality of devices include a real-time calculation device and an I/O processing device, the I/O processing device is connected to at least one I/O unit, and the I/O unit is used to directly or indirectly connect to a DUT; when testing the DUT, target data to be shared between devices is shared based on writing and reading data to and from a memory by the devices; the I/O processing device is used to transmit data between the device and the I/O unit connected to the I/O processing device.

For example, the target data includes third target data shared between the real-time calculation device and the I/O processing device; each I/O unit or channel in the I/O unit corresponds to a different storage address in the memory; the real-time calculation device is used to write the third target data to the storage address corresponding to the I/O unit or the channel in the I/O unit when it is necessary to share the third target data to the I/O unit or the channel in the I/O unit; the I/O processing device is used to read the third target data from the memory and send the third target data to the corresponding I/O unit or the channel in the I/O unit; the I/O processing device is also used to read the third target data corresponding to the specified I/O unit or the specified channel from the memory and feed it back to the real-time calculation device when the real-time calculation device needs to read the third target data of the specified I/O unit or the specified channel in the specified I/O unit from the memory.

The device referred to in this specification may refer to a circuit, a circuit board, a combination of circuit boards, or an overall structure including a circuit board and other structures (such as an assembly and/or a housing, etc.).

The following are explanations based on different connection methods among the plurality of devices in the test system:
Method 1: A plurality of devices are cascaded in sequence, and the memory configured in the test system includes: a plurality of target memories, and different devices correspond to different target memories; wherein the target memories are communicatively connected to the corresponding devices. The devices cascaded in sequence may be connected in an open loop or a closed loop, and the system may be any test system that needs to share data among a plurality of devices, and there is no limitation on the specific type of the test system.

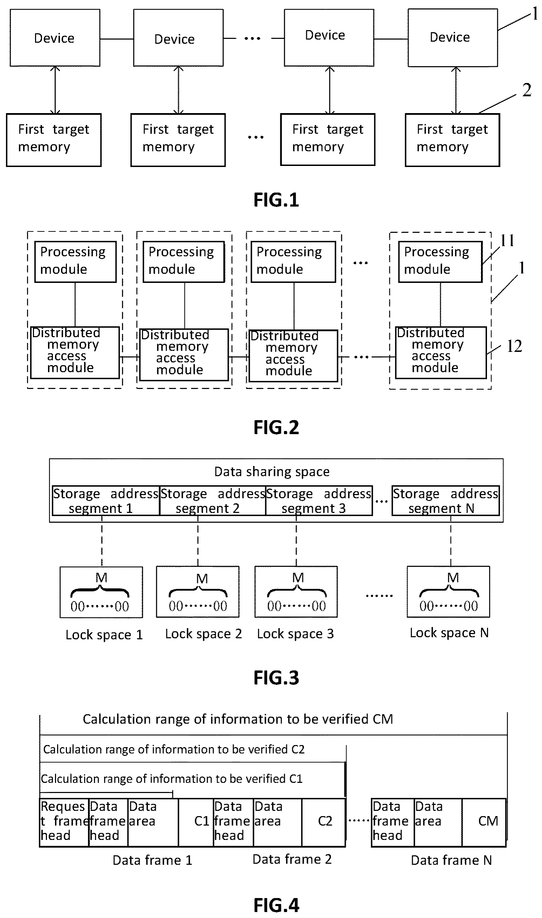

In one example, as shown in FIG. **1****,** the system includes a plurality of devices 1, which are connected in cascade and in an open loop, and each device 1 is directly or indirectly connected to a corresponding target memory 2.

The speed of interaction (e.g., the speed of writing and reading data) between the target memory and the device (e.g., its CPU) is higher than that of traditional communication networks such as Ethernet, and may be implemented by at least one of high-speed serial bus, optical fiber, etc. Furthermore, it is different from traditional communication networks such as Ethernet that a concept of high-speed data sharing is provided. In this process, Ethernet messages can be constructed and parsed without following the Ethernet protocol, which improves efficiency.

Device 1 (such as its CPU, and for example a combination of the CPU and other circuits) can directly access the target memory in the same manner as accessing the local memory, thereby effectively improving synchronization efficiency. According to testing, in a specific embodiment, the data synchronization bandwidth may reach 10 Gbps.

In addition, while using the target memory to achieve data sharing, in some examples, the communication of the communication network among some or all of the devices may also be realized through Ethernet, which can meet other communication requirements besides the target data, whether or not Ethernet is established separately, it can be used as an optional solution of the embodiment of the present application.

In another example, referring to FIG.2, each device 1 may include a processing module 11 and a distributed memory access module 12 that are communicatively connected, and the two may be arranged on different circuit boards or on the same circuit board, for example, a PCIe high-speed serial bus communication connection may be used between the processing module 11 and the distributed memory access module 12.

The processing module 11 may refer to any structure with data processing capability, such as a circuit including a processor and/or an FPGA, a circuit board including this circuit, or a structure including this circuit board and other structures (such as an assembly and/or a housing, etc.). For example, the processing module 11 includes a CPU and other circuit structures that facilitate communication and data processing by the CPU.

The distributed memory access module 12 comprises a distributed memory, a circuit structure for operating the distributed memory, and any other circuit structure for communicating and/or processing information with the processing module 11 and the distributed memory access module 12 in other devices 1. The distributed memory in the distributed memory access module 12 included in the device 1 is the target memory to which the device 1 is connected.

The distributed memory access modules 12 of the plurality of devices 1 are cascaded in sequence, realizing the cascade connection between the plurality of devices 1, wherein the distributed memory access modules 12 may be connected by optical fiber communication, that is, the devices 1 are connected by optical fiber communication.

In the foregoing, the distributed memory (i.e., the target memory) may be a memory (e.g., DDR) or a cluster of multiple memories. The distributed memory can be a memory built into the device 1 or a memory of the distributed memory access module 12 externally connected to the device 1. Any component, chip, circuit or device containing the component, the chip or the circuit, etc. that has data storage capabilities may be used as an example of the distributed memory. In addition, the device may only have one type of externally connected or built-in memory, i.e., a distributed memory. The device can also have a plurality type of externally connected or built-in memories, of which the distributed memory may be one type of them. At the same time, the distributed memory may also be understood as a memory used to share data among the devices.

In this embodiment, the data of each target memory may be kept synchronized; for example, the data may be kept synchronized through the processing of a first transmission process and second transmission process in the following, but data synchronization is not limited to this, for example, conventional means of reflective memory may also be used to achieve data synchronization of a plurality of target memories.

The device 1 is used for, when receiving an operation request in the first transmission process , if the device 1 is required to perform a target operation on a target memory, writing the operation instruction of the target operation into the operation request and transmitting the operation request to the next-level device; the first transmission process refers to the process of transmitting the operation request from the first device cascaded among a plurality of devices to the last device in sequence; the target operation includes the operation of writing target data and/or specified data into the target memory.

The device 1 is used for operating the target memory corresponding to the device based on all operation instructions contained in the operation request when receiving the operation request in the second transmission process, and transmit the operation request to the next device to be transmitted; the second transmission process refers to: the process in which after the first transmission process, the operation request is transmitted from the last device to the first device in sequence, or: the process in which when the plurality of devices are connected in a closed loop, the operation request is transmitted again from the first device to the last device in sequence.

After the second transmission process is completed, the target memories in the plurality of devices keep data synchronization, and the data in each target memory is used for being read by the corresponding device.

In one example, each target memory is provided with N storage address segments and N lock spaces corresponding to the N storage address segments, where N is an integer greater than or equal to 1. Specifically, the target memory of each device in the system includes at least two parts: one part is a data sharing space for sharing data, in which N storage address segments are provided, that is, the data sharing space is a complete address segment, which may be divided into a plurality of address segments; the other part is a lock space, the number of which is also N, and the storage address segments correspond to the lock spaces one by one. The operation privilege of each storage address segment is configured by the corresponding lock space, that is, when the device needs to write data into a certain storage address segment, it is necessary to firstly acquire the operation privilege of the device from the lock space corresponding to the storage address segment; data synchronization is kept among the target memories of the plurality of devices, that is, the data in the data sharing space and the lock space in each target memory is kept synchronized; wherein, the lengths of the N storage address segments may be the same or different, and the N storage address segments can correspond to different functions respectively.

At least one of the plurality of devices is a first target device. In a further example, for example, any one of the devices is a first target device, that is, the devices 1 of the test system can perform the following process as a first target device to solve the conflict problem of a plurality of devices 1 writing data into the same address segment of the target memory.

The first target device is used to: when the target data needs to be written into the target memory, acquire the target storage address segment to which the target data points from the N storage address segments. Specifically, when the first target device needs to share the target data to at least one other device, it is necessary to write the target data into each target memory, compare the address segment to which the target data points with the N storage address segments of the target memory respectively, and determine a storage address segment pointed to by the address segment to which the target data points, which is recorded as the target storage address segment. Wherein, the writing includes adding from scratch, as well as overwriting, replacing, and modifying the data, the target data may be understood as any data that needs to be shared through the target memory.

Subsequently, the first target device writes a first preset value into the target lock space in the target memory to try to obtain the operation privilege of the target storage address segment; the target lock space is the lock space corresponding to the target storage address segment in the N lock spaces. Specifically, after the first target device determines the target storage address segment to which the target data points, if it is necessary to write the target data into the target storage address segment, it is first necessary to obtain the operation privilege of the target storage address segment, and the way to obtain the operation privilege of the target storage address segment is to write the first preset value into the target lock space corresponding to the target storage address segment. The specified data may include a first preset value and/or a second preset value.

For example, each device has its corresponding first preset value, so that it is possible to mark which device currently obtains the operation privilege of the target storage address segment based on different first preset values.

For another example, each lock space may include: a flag address segment and an identity address segment, the flag address segment is provided for writing the first preset value (for example, 1) or the second preset value (for example, 0), and the identity address segment is provided for writing an identifier of the device; accordingly, when the first target device writes the first preset value into the target lock space, it writes the identifier of the first target device into the target lock space simultaneously, to establish a mapping relationship between the first preset value and the identifier of the first target device, thereby marking that the first target device has obtained the operation privilege of the target storage address segment.

For further example, a plurality of devices include M devices, where M is an integer greater than 1. Each lock space may include M flag bits, each flag bit corresponds to one device, and each device can operate on the flag bit corresponding to it. For example, the s-th device can operate on the s-th flag bit among the M flag bits, when it is used as the first target device, if it is necessary to obtain the operation privilege, the value of the s-th flag bit may be rewritten from the second preset value to the first preset value, such as from 0 to 1, and then by reading whether the s-th flag bit is the first preset value, such as whether it is 1, it is determined whether the s-th flag bit is rewritten successfully (that is, whether the operation privilege is obtained). Generally speaking, the M flag bits in the lock space are configured such that at most one flag bit can be the first preset value, and the target memories are kept synchronized, then, if other flag bit among the M flag bits already has a first preset value because other device has obtained the operation privilege (i.e., successfully rewritten the value of its corresponding flag bit), the s-th flag bit will not be successfully rewritten from the second preset value to the first preset value, meaning that the operation privilege has not been obtained, otherwise, meaning that the operation privilege has been obtained.

For example, the cascaded M devices are connected in open-loop, if the first target device is the first device in the cascaded M devices, the first target device generates an operation instruction for writing a first preset value into the target lock space in the target memory, and sends the operation instruction to the last device in sequence along the cascade; if the first target device is the last device in the cascaded M devices, the first target device generates an operation instruction for writing the first preset value into the target lock space in the target memory, and sends the operation instruction to the first device in sequence along the reverse direction of the cascade; if the first target device is an intermediate device between the first device and the last device in the cascaded M devices, the first target device generates an operation instruction for writing a first preset value into the target lock space in the target memory, transmits the operation instruction to the last device along the forward direction of the cascade, and transmits the operation instruction to the first device along the reverse direction of the cascade.

The M devices will all execute the operation instruction for writing the first preset value into the target lock space in the target memory, and try to write the first preset value into the target lock space in the target memory connected thereto; since the data in the target memories connected to all devices is synchronized, there are only two cases: one is that the target lock space in the target memory of each device has not been written with the first preset value corresponding to any device, that is, there is currently no device (including the first target device) occupying the operation privilege of the target storage address segment, and at this time, the first preset value can be written into the target lock space in the target memory of each device, that is, all the devices can successfully write the first preset value into the target lock space, the first target device successfully obtains the operation privilege of the target storage address segment; another is that the target lock space in the target memory of each device is written with the first preset value corresponding to any device, that is, there is currently one device occupying the operation privilege of the target storage address segment, and this device may also be the first target device, which is the operation privilege of the target storage address segment obtained by the first target device when sharing the previous data; at this time, the first preset value corresponding to the first target device cannot be written into the target lock space in the target memory of each device, that is, the operation of each device to write the first preset value into the target lock space fails, and the first target device fails to obtain the operation privilege of the target storage address segment.

It should be noted that, in the absence of errors, the write operation of any device to its target memory will eventually be synchronized to the target memories of other devices, resulting in the target memories being synchronized to the result after writing.

If the first target device reads the first preset value written by the first target device in the target lock space of the target memory connected thereto, it writes at least part of the target data into the target storage address segment of the target memory, so that any device among the M devices can read at least part of the target data from the connected target memory.

Specifically, the first target device can determine whether the operation of writing the first preset value into the target lock space in the target memory is successful, that is, whether the operation privilege of the target storage address segment is successfully obtained by reading the data in the target lock space of the target memory to which it is connected; if the first preset value written by the first target device is read in the target lock space of the target memory of the first target device, it is determined that the operation privilege of the target storage address segment is successfully obtained, and then at least part of the target data is written into the target storage address segment of target memory of the device, so that any device among the plurality of devices can read at least part of the target data from the corresponding target memory; wherein, the length of the target data written into the target memory can be determined by the rules set in the device, for example, only data of a preset length can be written into the storage address segment each time, if the length of the target data is greater than the preset length, only the target data of the preset length can be written into the target storage address segment at one time, and the remaining target data that has not been written will be written after the next operation privilege is obtained; if the length of the target data is less than or equal to the preset length, all the target data can be written into the target storage address segment at one time.

The specific method of writing at least part of the target data into the target storage address segment of the target memory may be similar to the method of writing the first preset value into the target lock space in the target memory of the device, and will not be described in detail here.

After the first target device writes at least part of the target data into the target storage address segment of the target memory, at least part of the target data will also be written into the target storage address segment of the target memory of each of the M devices. Thus, when any of the M devices needs to read the target data, it can read at least part of the target data from the connected target memory.

If the first preset value written by the first target device is not read in the target lock space of the target memory of the first target device, the first preset value can be written to the target lock space in the target memory again until the operation privilege of the target storage address segment is successfully obtained; wherein, the time interval between two adjacent writings of the first preset value to the target lock space in the target memory can also be pre-configured in the device.

In one example, the first target device may also write a second preset value into the target lock space in the target memory after at least part of the target data is written, to release the operation privilege of the target storage address segment. Wherein, the writing of the second preset value may be, for example, rewriting the first preset value written in the first target device to the second preset value. For example, the first preset value corresponding to the flag bit of the first target device is rewritten to the second preset value, such as rewritten from 1 to 0.

Specifically, after the first target device writes at least part of the target data into the target storage address segment of the target memory, it can determine that the current writing of the target data is completed when at least part of the target data to be written is completely written into the target storage address segment; or each time the operation privilege is obtained, only data of a preset length (for example, 1024 bytes) can be written into the storage address segment, then the current writing of the target data is determined to be completed when data of the set length in at least part of the target data is written into the target storage address segment; however, it is not limited to this, and different conditions for determining the end of data writing can be set according to the differences of the writing duration and the function type corresponding to the storage address segment.

After determining that the current writing of the target data is completed, the second preset value is written into the target lock space in the target memory. After the second preset value is written into the target lock space, the operation privilege of the target storage address segment is released, and the first preset value may be written into the target lock space by any device again, that is, the operation privilege of the target storage address segment may be obtained by any device again. In addition, the specific method of other devices writing the second preset value into the target lock space in the target memory may be similar to the method of writing the first preset value into the target lock space in the target memory, which will not be repeated here; and the operation of writing the second preset value into the target lock space can only be triggered by the first target device that has obtained the operation privilege of the target storage address segment, so as to prevent the data in the target lock space from being tampered with by other devices and affecting the data writing of the first target device.

In addition, if after the current writing is completed, there is still some remaining target data that has not been fully written into the target storage address segment, the first target device needs to re-acquire the operation privilege of the target storage address segment and then write the remaining target data into the target storage address segment until all the target data is fully written into the target storage address segment.

It should be noted that this embodiment is described by taking writing target data into the target memory as an example, and may also be used for other target operations that can change the data in the target memory (such as deleting the target data) to ensure that the target memories connected to the M devices will not cause conflicts during the data synchronization process.

In this embodiment, by setting a lock space corresponding to each storage address segment in the target memory, the operation privileges of each storage address segment are managed, so that all devices can write data to each storage address segment in an orderly manner, ensuring that no conflict occurs when the devices write data into the same storage address segment in the target memory, which helps to improve the efficiency of data synchronization between devices.

Exemplarily, referring to FIG. 3, the data sharing space of the target memory includes N storage address segments, which are storage address segment 1 to storage address segment N, the target memory includes N lock spaces, and the storage address segments correspond to the lock spaces one by one. Each lock space includes: M flag bits corresponding to M devices one by one; taking the first preset value being "1" and the second preset value being "0" as an example, when the lock space is not modified by any device, its M flag bits are all 0; and when it is modified by any device, the flag bit corresponding to the device is 1, and the other flag bits are still 0. Wherein, there is a mutually exclusive logic in the lock space, and at most one flag bit in the lock space can be the first preset value. If one flag bit in the lock space has been written with the first preset value, the other flag bits cannot be rewritten from the second preset value to the first preset value.

Exemplarily, in this embodiment, efficient data synchronization between devices can be achieved through the transmission of operation requests, the specific process is as follows:
During a first transmission process of the first operation request, the first target device writes the first operation instruction for writing the first preset value into the target lock space into the first operation request, and the first transmission process refers to the process in which the operation request is transmitted from the first device cascaded in the M devices to the last device in sequence; during the second transmission process of the first operation request, the first target device operates the target memory of the first target device based on all the operation instructions contained in the first operation request, wherein when executing the first operation instruction, the first target device writes the first preset value into the target lock space, and reads whether the first preset value is written into the target lock space by the first target device; the second transmission process refers to the process in which the operation request is transmitted from the last device to the first device in sequence after the first transmission process, or the process in which when the M devices are connected in a closed loop, the operation request is transmitted from the first device to the last device in sequence again. Specifically:
The data synchronization between the target memories 2 of the plurality of devices 1 is divided into two processes, as follows:
One process is the first transmission process of the first operation request, in the first transmission process, the first operation request is transmitted from the first device 1 to the last device 1 in sequence, for each device 1, when the device 1 receives the first operation request, if there is an unexecuted operation instruction that needs to perform a target operation on the target memory, the device 1 writes the operation instruction into the first operation request and transmits the first operation request to the device 1 at the next level until transmitting to the last device 1, the last device 1 also performs the above processing when receiving the first operation request, and at this time, the first transmission process of the first operation request is ended; the first operation request includes the first operation instruction that each device 1 needs to perform the target operation on the target memory 2, and then the second transmission process of the first operation request is started.

Wherein, the first target device generates the first operation instruction for writing the first preset value into the target lock space, and writes the first operation instruction into the first operation request upon receiving the first operation request.

The operation instruction that each device 1 needs to perform the target operation on the target memory 2 is the operation instruction generated by the device during the running of the system that are required to write the corresponding data into the target memory 2, which may be writing data into the lock space or writing data into the data sharing space.

Another process is the second transmission process of the first operation request, which is the return process of the first operation request, in the second transmission process, the first operation request is returned from the last device 1 to the first device 1 in sequence, for each device 1, when the device 1 receives the first operation request, it acquires all operation instructions contained in the first operation request, and executes all the obtained operation instructions to operate the target memory 2. At the same time, the first operation request is transmitted to the device 1 at the previous level until it is transmitted to the first device 1. When the first device 1 receives the first operation request, it also executes all the first operation instructions contained in the first operation request to operate the target memory 2, at this point, the second transmission process is ended, and all devices 1 have executed all the first operation instructions contained in the first operation request, and performed the same operation on their own target memory 2 (including data sharing space and lock space).

Wherein, each device 1 executes the first operation instruction generated by the first target device, and write the first preset value into the target lock space in the target memory connected thereto. Taking one device as an example, when executing the first operation instruction, it attempts to write the first preset value into the target lock space of the target memory connected thereto. If the target lock space is not written with the first preset value, it means that no other device has obtained the operation privilege of the target storage address segment, and the first preset value may be written into the target lock space, at this time, the device executes the first operation instruction generated by the first target device and writes the first preset value into the target lock space of the target memory successfully; if the target lock space has been written with the first preset value, it means that there is currently a device occupying the operation privilege of the target storage address segment, and this device may also be the first target device that generates the first operation instruction, and the first target device generating the first operation instruction obtains the operation privilege of the target storage address segment when sharing the previous data, at this time, the device fails to write the first preset value into the target lock space.

After the device attempts to write the first preset value into the target lock space of the target memory connected thereto, it reads the data in the lock space to determine whether the write operation is successfully executed, that is, to determine whether the first target device generating the first operation instruction obtains the operation privilege of the target storage address segment; wherein, if the first preset value written by the first target device is read in the lock space, it means that the first target device successfully obtains the operation privilege of the target storage address segment, and the first target device starts the transmission of the second operation instruction to achieve the writing of the target data; if the first preset value cannot be read in the lock space, it means that the first target device fails to obtain the operation privilege of the target storage address segment. Wherein, it is taken as an example that the device immediately reads the data in the lock space after executing the first operation instruction to determine whether the first target device obtains the operation privilege of the target storage address segment, but it is not limited to this, and the data in the lock space may also be read after a period of time after the operation instruction is executed. It should be noted that in the second transmission process of the first operation request, all devices 1 preferably execute all the operation instructions contained in the first operation request in the same order to ensure that the data among the target memories 2 in a plurality of devices 1 keeps synchronized. In addition, if the regions, objects, etc. operated by the operation instructions usually do not overlap or can be confirmed not to overlap, in the specific example, some or all of the different devices may also execute the operation instructions in different orders, still ensuring that the data among the target memories 2 in the plurality of devices 1 may keep synchronized.

In some other embodiments, a loop-shaped reflective memory synchronization method may also be used to achieve synchronization among the devices 1. However, with this method, it is necessary to wait for the data writing operation of one device 1 to be synchronized before the data writing operation of the next device 1 can be synchronized. The synchronization of data writing operations of a plurality of devices 1 requires the above process to be repeated a plurality of times, resulting in a long synchronization time to complete all data writing operations, low data synchronization efficiency, and difficulty in meeting scenarios with high requirements for data synchronization (such as HIL system).

In the processing of the first transmission process and the second transmission process, only two rounds of operation requests need to be transmitted among a plurality of devices cascaded to complete the data synchronization among the target memories in all devices, which can ensure the data consistency among the target memories of the plurality of devices, save the data synchronization cycle, and have the advantages of high sharing efficiency, good accuracy and low delay. Specifically, it can avoid that the operation instructions generated at similar times are executed with a larger delay.

In one example, during the second transmission process of the first operation request, when each device 1 executes all the first operation instructions in the first operation request, it operates the target memory in sequence according to the order in which all the first operation instructions in the first operation request are written into the first operation request. In another example, the target memory may also be operated in sequence in the reverse order of the order in which all the first operation instructions in the first operation request are written into the first operation request. In yet another example, the order of all the first operation instructions in the first operation request may be reset (for example, after the first transmission process is completed, the order is reset by the last device 1), and then each device 1 operates the target memory in sequence according to the same reset order.

In addition, during the second transmission process of the operation request, the transmission of the operation request by each device 1 and the execution of the operation instruction in the operation request by each device 1 can be parallel, that is, while executing the first operation instruction, each device 1 transmits the operation request to the next device to be transmitted, in some data synchronization solutions, the operation instruction needs to be executed first and then transmitted, in comparison, the parallel method can improve the synchronization of the execution of the operation instruction by each device 1.

Then, using the second operation request to complete the writing of the target data, as follows:
For the first target device receiving the second operation request:
During the first transmission process of the second operation request, if the first target device reads the first preset value written by the current device in the target lock space of the target memory, the first target device writes a second operation instruction for writing at least part of the target data into the target storage address segment of the target memory into the second operation request; the second operation request is an operation request obtained by the first target device after reading the first preset value written by the first target device in the target lock space of the target memory of the first target device.

During the second transmission process of the second operation request, the target memory of the first target device is operated based on all operation instructions contained in the second operation request, wherein when executing the second operation instruction, at least part of the target data is written into the target storage address segment in the target memory of the first target device.

Specifically, for the current device that receives the second operation request, the current device determines whether the operation privilege of the target storage address segment is successfully obtained by reading the data in the target lock space of the target memory connected thereto; after the current device obtains the operation privilege of the target storage address segment successfully, it will write the second operation instruction for writing at least part of the target data into the target storage address segment of the target memory into the second operation request, and the second operation request is an operation request in the first transmission process received by the current device after obtaining the operation privilege of the target storage address segment. When the current device fails to obtain the operation privilege of the target storage address segment, it is prohibited to write the second operation instruction into any operation request. Wherein, the second operation instruction may be generated and cached in the current device when the first operation instruction is generated, or may be generated after the current device successfully obtains the operation privilege of the target storage address segment.

After the first transmission process and the second transmission process of the second operation request, each device 1 executes the second operation instruction, and the target data is written into the target storage address segment in the target memory connected to each device 1. The first transmission process and the second transmission process of the second operation request are similar to those of the first operation request, and will not be repeated here.

After determining that the current writing of the target data is completed, the current device generates an operation instruction for writing a second preset value into the target lock space in the target memory, and adds this operation instruction to the operation request when the operation request is obtained, thus that through two rounds of transmission of the operation request (including the first transmission process and the second transmission process), the second preset value can be written into the target lock space in the target memory of each device, thereby releasing the operation privilege of the target storage address segment.

It should be noted that in this embodiment, the operation request can be generated by the first device cascaded among the M devices. When the first device detects the occurrence of a preset event, it generates an operation request; for example, after the second transmission process of the operation request is completed, the first device generates a new operation request and repeats the first transmission process and the second transmission process of the operation request above-mentioned. Wherein, the preset event is any one or any combination of the following: the first device completes the operation of the target memory of the first device based on all the operation instructions included in the operation request; the first device is timed to the set time period; and the first device responds to the triggered interrupt.

In this embodiment, when the current device that receives the second operation request needs to share target data, it obtains the operation privilege of the target storage address segment through two rounds of transmission of the first operation request, and then writes the target data to the target storage address segment through two rounds of transmission of the second operation request, thus that while achieving efficient data synchronization among the target memories in all devices, it solves the operation conflict problem for the storage address segment of the target memory among the devices, and further improves the data synchronization efficiency.

In one example, in this embodiment, a verification process may be added during the transmission of the operation request, as follows:
Some or all of the plurality of devices 1 are second target devices.

The device 1 is used to write an operation instruction to be executed into the operation request during the first transmission process of the operation request, and the operation instruction is used to write the target data into the target memory for being read by the device corresponding to the target memory.

The second target device is used to write the information to be verified which is generated according to at least part of the information in the operation request into the operation request during the first transmission process.

The device 1 is further configured to execute all operation instructions in the operation request during the second transmission process of the operation request.

At least one device including the first device is used to verify the information to be verified in the operation request during the second transmission process to determine whether a transmission error occurs in the operation request.

In this embodiment, during the first transmission process of the operation request, if the device receiving the operation request is the second target device, the device will also generate information to be verified based on at least part of the information in the operation request, and write the information to be verified into the operation request before transmitting it to the next-level device. That is, for the second target device, during the first transmission process, it can not only write the operation instruction to be executed into the operation request, but also generate the information to be verified based on at least part of the information in the operation request and add the information to be verified into the operation request before transmitting the operation request to the next-level device in the first transmission process. For example, after the second target device adds a blank data frame into the operation request and writes the operation instruction to be executed, it writes the information to be verified into the same data frame.

In this embodiment, the second target device generates the information to be verified in any of the following ways: generating the information to be verified according to the data (e.g., data frame) written into the operation request by the second target device in the operation request, and adding the information to be verified into the operation request; or generating the information to be verified according to the data written into the operation request (e.g., all data frames of the written data), and adding the information to be verified into the operation request. Wherein, the information to be verified is, for example, a CRC check code, an MD5 check code, or a SHA1 check code, but is not limited to this, and one or more algorithms for calculating the information to be verified may also be preset in the second target device, and the second target device calculates the information to be verified based on the preset algorithm.

In this embodiment, at least one of the plurality of devices is configured as the second target device, for example, each of the plurality of devices is the second target device, at this time, each device in the system calculates the information to be verified and adds it into the operation request, so that when each second target device verifies the information to be verified in the subsequent second transmission, it determines the location in the operation request where the transmission error occurred.

Referring to FIG.4, the system includes M devices (M is an integer greater than 1), and each device in the system is the second target device, it is taken as an example that there are operation instructions to be executed in each device, and each second target device generates information to be verified based on all data frames of the data written into the operation request.

In the first transmission process, starting from the first device, after the first device adds data frame 1 into the operation request and writes the operation instruction into the data frame 1, it calculates the information to be verified C1 according to all the information in data frame 1, and writes the information to be verified C1 into the data frame 1; then transmits the operation request to the device at the next level, and this device repeats the above process, adds data frame 2 into the operation request, and writes the operation instruction to be executed into the data frame 2, then calculates the information to be verified C2 according to all the information in data frames 1 and data frames 2 in the operation request (including the information to be verified C1), and writes the information to be verified C2 into the data frame 2, and so on, until the operation request is transmitted to the last device, the last device writes the operation instruction to be executed into data frame M of the operation request, calculates the information to be verified CM according to all the information of the data frame 1 to the data frame M in the operation request (including the information to be verified C1 to CM-1), and writes the information to be verified CM into the data frame M, thus the first transmission process ends.

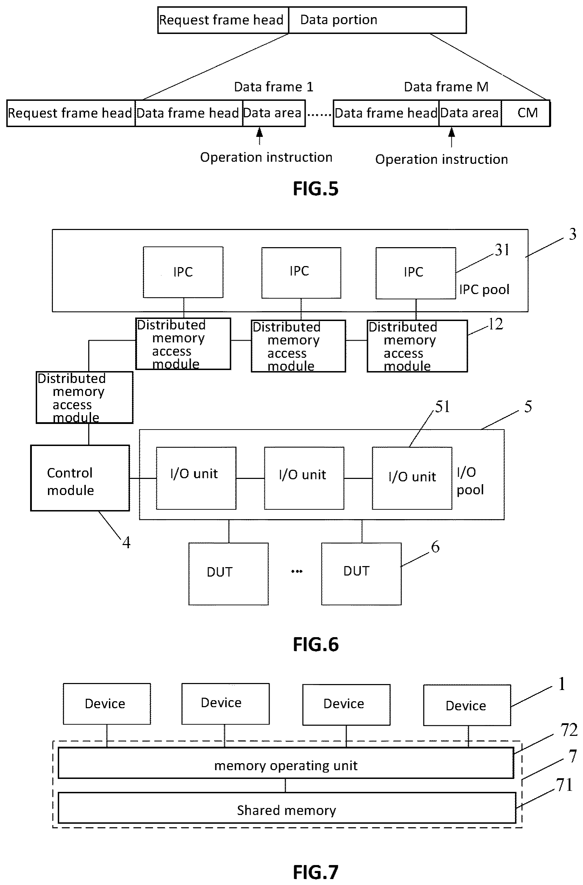

In another example, the last device cascaded among the plurality of devices is configured as the second target device; referring to FIG. 5, the system includes M devices (M is an integer greater than 1), and a M-th device in the system is configured as the second target device, it is taken as an example that there are operation instructions to be executed in each device, and the second target device generates information to be verified based on all data frames of the data written in the operation request.

The first transmission process is similar to the first transmission process of FIG. 4 and will not be described in detail here. The main difference is that the devices except the last device in FIG. 5 only write the operation instruction into the data frame (data frame 1 to data frame M-1) added in the operation request, after the operation request is transmitted to the last device, the last device writes the operation instruction to be executed into the data frame M of the operation request, calculates the information to be verified CM based on all the information of the data frame 1 to data frame M in the operation request, and writes the information to be verified CM into the data frame M, and the first transmission process ends. Wherein, the information to be verified CM calculated by the last device represents the information of all data frames in the operation request, and in the second transmission process, it can be determined whether there is any data transmission error in any data frame in the operation request during the transmission process by only verifying the information to be verified CM.

In the second transmission process, no new information to be verified will be added into the operation request, and the information to be verified in the operation request is used to: in the second transmission process, verify the information to be verified in the operation request by at least one device including the first device to determine whether a transmission error occurs in the operation request. Specifically, at least one device including the first device among the plurality of devices is a third target device; in the second transmission process of the operation request, if the device receiving the operation request is the third target device, the information to be verified in the operation request will be verified to determine whether a transmission error occurs in the operation request.

In this embodiment, when at least one device including the first device among a plurality of devices is a third target device, the specific configuration method may be set according to the needs, for example, starting from the first device, one third target device is configured every two devices; or only the first device is configured as the third target device; or all devices are third target devices. When all devices are third target devices, the link where the data transmission error occurs can be accurately located, that is, between which two devices the data transmission error occurs, so as to prompt timely line maintenance.

For example, the third target device verifies the information to be verified in the following manner: for each information to be verified in the operation request, based on at least part of the information at the same position as the information to be verified, generating reference verification information corresponding to the information to be verified; thereby, the third target device can calculate the reference verification information corresponding to each information to be verified, wherein the same information used when calculating the reference verification information corresponding to each information to be verified refers to the information at the same position in the operation request (for example, information located in a certain data frame in the operation request), but not the same content. Subsequently, each information to be verified is compared with the corresponding reference verification information respectively, when all the information to be verified is the same as the corresponding reference verification information, it is determined that no transmission error occurs in the operation request; when any information to be verified in the operation request is different from the corresponding reference verification information, it is determined that a transmission error occurs in the operation request.

Taking FIG. 4 as an example, in the second transmission process, the operation request is transmitted back to the first device in sequence, taking any third target device (which may be the first device) as an example, when receiving the operation request, it executes all the operation instructions in the operation request and verifies all the information to be verified in the operation request. First, the reference verification information corresponding to each information to be verified is calculated respectively, that is, the third target device calculates the reference verification information K1 corresponding to the information to be verified C1 based on all the information except the information to be verified C1 in the data frame 1, calculates the reference verification information K2 corresponding to the information to be verified C2 based on all the information except the information to be verified C1 in the data frame 1 and data frame 2, ..., calculates the reference verification information KM corresponding to the information to be verified CM based on all the information except the information to be verified CM in the data frame 1 to data frame M. Subsequently, each information to be verified is compared with the corresponding reference verification information respectively, if all the information to be verified is the same as the corresponding reference verification information, it is determined that no transmission error occurs in the operation request; if there is one or more information to be verified different from the corresponding reference verification information, it is determined that a transmission error occurs in the operation request.

Taking FIG. 5 as an example, in the second transmission process, the operation request is transmitted back to the first device in sequence, taking any third target device (which may be the first device) as an example, when receiving the operation request, it executes all the operation instructions in the operation request and verifies the information to be verified CM in the operation request, that is, the third target device calculates the reference verification information KM corresponding to the information to be verified CM based on all the information except the information to be verified CM in the data frame 1 to data frame M. Subsequently, the information to be verified CM is compared with the corresponding reference verification information KM, if the information to be verified CM is the same as the reference verification information KM, it is determined that no transmission error occurs in the operation request; if the information to be verified CM is different from the reference verification information KM, it is determined that a transmission error occurs in the operation request.

In the second transmission process, for each device, when it is determined that a transmission error occurs in the operation request, it may choose to execute or not execute the operation instructions in the operation request; for example, each device executes all operation instructions in the operation request only when no transmission error occurs in the operation request.

In one example, for each third target device, it executes all the operation instructions in the operation request only when it is determined that no transmission error occurs in the operation request; when it is determined that a transmission error occurs in the operation request, it does not execute all the operation instructions in the operation request. Furthermore, when it is determined that a transmission error occurs in the operation request, a certain third target device may mark the operation request, and mark that it has a transmission error. When each third target device after this third target device receives the operation request, if it is determined that the operation request is marked as having a transmission error, it may not execute all the operation instructions in the operation request, and directly transmit the operation request to the next level device without verifying the information to be verified in the operation request; for each device that is not configured as a third target device, when it receives the operation request and determines that the operation request is marked as having a transmission error, it may not execute all the operation instructions in the operation request and directly transmit the operation request to the next level device.

In addition, for the first device, it may also execute the following process: when it is determined that there is no transmission error in the operation request, it generates the next round of operation requests and transmits; when it is determined that there is a transmission error in the operation request, regenerate the operation request of this round and transmit it again. Specifically, the operation request is transmitted in rounds, that is, a plurality of rounds of operation requests are transmitted in sequence. In each round, the operation request of this round is transmitted according to the aforementioned first transmission process and second transmission process. At the end of the second transmission process, the first device will verify the information to be verified. When it is determined that there is no transmission error in the operation request, it means that the operation request of this round has been successfully processed, and then the transmission of the next round of operation requests is started; if it is determined that there is a transmission error in the operation request, it means that the operation request of this round has not been successfully processed, and the first device transmits the operation request of this round again until all rounds of operation requests are transmitted.

In one example, each round of operation request further includes: characterizing identification information of the round of operation request, the identification information is, for example, a round number, for example, if the first round is numbered as 1, the next round is numbered as 2, and so on. The identification information may be added by the device or module that generates the operation request when generating the operation request, or may be added by the first device when receiving the operation request, the identification information may be written in the request frame header of the operation request. One of the rounds may be understood that the operation request is sent by the first device and returns to the first device after a first transmission process and a second transmission process.

In the first transmission process, taking the current device that receives the operation request as an example, the current device reads the identification information representing the round in the operation request, and compares this identification information with the identification information of the operation request of the previous round, if the two are the same, it means that this operation request is still the operation request of the previous round, that is, the operation request of the previous round has not been successfully processed, and the operation instructions of the previous round are repeatedly written in the operation request; if the two are different, it means that this operation request is an operation request of a new round, that is, the operation request of the previous round has been successfully processed, and new operation instructions are written in the operation request, such as the latest operation instructions, or the operation instructions that are not the latest but have not been written in the previous round. Wherein, the operation instructions written by each device in the operation request may be the operation instructions to be executed that is generated by the device between two adjacent different rounds.

Therefore, when one device is required to share the target data with other devices (one or more fourth target devices), the target data may be synchronized to the target memory in the fourth target device through the processing of the above-mentioned first transmission process and the second transmission process, so that the fourth target device may directly read the required target data from the target memory when needing to use at least part of the target data.

In one example, the above system including a plurality of devices that are cascaded is a HIL system, referring to FIG. 6, the HIL system includes: an IPC pool 3, at least one control module 4 (one is shown in the figure as an example) and an I/O pool 5.

Each device 1 may be understood as an IPC 31 or control module 4 equipped with a distributed memory access module 12, a plurality of devices 1 include at least one IPC 11 and at least one control module 4. Through the sequential cascading of a plurality of distributed memory access modules 12 (the distributed memory access modules 12 are connected, for example, by optical fibers), the IPCs 31 and the control modules 4 may be cascaded in sequence. Furthermore, based on the application of the data sharing method, the efficiency and accuracy of data sharing between the IPC 31 and the control module 4 may be guaranteed, meeting the requirements of the hardware-in-the-loop test process.

Wherein, the IPC pool 3 may include at least one IPC 31 (in the figure, taking the IPC pool 3 including three IPCs 31 as an example), and the I/O pool 5 may include a plurality of I/O units 51, the IPCs 31 and the I/O units 51 may be arranged in different cabinets or in the same cabinet. Specifically, the number of IPCs 31 in the IPC pool 3 may be fixed or scalable, and the IPCs 31 in the IPC pool 3 may be arranged in the same cabinet or in different cabinets. The IPCs 31 correspond to the distributed memory access modules 12 one by one and are communicatively connected to the distributed memory access modules 12. The number of I/O units 51 in the I/O pool 5 may be fixed or scalable, and the I/O units 51 in the I/O pool 5 may be arranged in the same cabinet or in different cabinets.

In an example, the IPC pool 3 may include at least one IPC 31 with a configurable number, that is, the number of IPCs 31 in the IPC pool 3 is scalable, and its number can be configured according to demand, site, cost, etc. Wherein, the IPCs 31 in the IPC pool 3 are communicatively connected with each other.

In an example, the I/O pool 5 includes at least one I/O units 51 with a configurable number (in the figure, taking the I/O pool 5 including three I/O units 51 as an example), that is, the number of I/O units 51 in the I/O pool 5 is scalable, and its number may be configured according to demand, site, cost, etc. Wherein, the I/O units 51 in the I/O pool 5 are communicatively connected with each other.

The control module 4 is communicatively connected to the IPCs 31 in the IPC pool 3, and the control module 4 is also communicatively connected to the I/O units 51 in the I/O pool 5. For example, the control module 4 and the I/O units 51 are connected to the same EtherCAT network, wherein the I/O units and the control module 4 are connected in a cascade manner and communicate based on EtherCAT. The use of EtherCAT may substantially meet the demand for low latency. Wherein, the control module 4 may be a computer including an I/O controller. In addition, the I/O unit 51 can also be plugged into the control module 4, for example, the I/O unit 51 is connected to the control module 4 through a data bus (such as a PCIe bus) of the control module 4, etc. The number of the control module 4 may be one or more, and the I/O units communicated to the different control modules are different.

Wherein, the IPC is a form of real-time calculation device, which can be a card installed in an IPC cabinet, or a separate equipment; the control module is a form of I/O processing device.

The target data transmitted between the I/O unit 51 and the IPC 31 is transmitted based on the operation result of the distributed memory access module on the distributed memory, and the data in all the distributed memories are kept synchronized.

Any data that is able to be transmitted between the IPC 31 and the I/O unit 51 may be understood as the target data written or read by the operation instruction.

Wherein, the IPC 31 may be understood as part or all of the real-time simulator RTPC in the HIL system. The IPC 31 and the control module 4 may be different computers, or different circuit boards, circuits, etc.

Wherein, the I/O unit 51 may be understood as an input/output unit.

Specifically, it can be understood that the I/O unit 51 meets at least one of the following: it is able to realize data input relative to the DUT 6; it is able to realize data output relative to the DUT 6; it is able to realize data input relative to the IPC 31; it is able to realize data output relative to the IPC 31; wherein, the data A input and/or output of the I/O unit 51 relative to the DUT 6 and the data B input and/or output of the I/O unit 51 relative to the IPC may be related or unrelated.

Specifically, the data A and the data B may be data of the same content in different forms, for example, a digital signal of a certain content received from the IPC 31, and an analog signal of the same content sent to the DUT 6, or vice versa, for another example, a signal before the fault is injected is received from the IPC 31, and a signal after the fault is injected by the I/O unit 51 is sent to the DUT 6;

The data A and the data B may also be data of the same content in the same form; the data A and the data B may also be data with different contents. For example, the data A and the data B are respectively a trigger signal that trigger the I/O unit 51 to generate a Sign1 signal and the Sign1 signal; for another example, the I/O unit 51 needs to obtain a conditional signal from the IPC 31, so as to simulate the Sing2 signal that needs to be sent to the DUT 6, at this time, the conditional signal and the Sign2 signal are respectively the data A and the data B; the I/O unit 51 may refer to a circuit, a circuit board, or a device including a circuit board and other assemblies.

In an example, wherein the I/O unit 51 may not only interact with the IPC via the control module, and but also interact with the DUT (such as a controller of a vehicle) directly or via a switching matrix.

The I/O unit 51 may only implement input and/or output functions, in some examples, may also process the transmitted signal during the input and/or output process, such as make signal conversion, fault simulation, information simulation, signal generation, on/off control, etc. It can be seen that whether or not other functions are integrated, it may be used as an implementation method of the I/O unit 51.

Wherein, the I/O unit 51 may be an I/O card, for example, a card supporting at least one of the following functions: digital signal input, analog signal input, digital signal output, analog signal output, PWM signal input, PWM signal output, high-side power output, and low-side power output. Wherein the acquisition and output of high-speed signals may be further realized, in addition, the flexible configuration of card resources may be realized according to the requirements, the card accuracy and sampling frequency indicators brought by this technology have reached the industry-leading level.

The I/O cards include at least one of the following: AD PWM-IN card, DAC card, FIU card, PWM-OUT card, RELAY-IO card, RC card, PSI5&DSI3&SENT card, multi-bus card (Flexray/CANFD/LIN), Eth (vehicle-mounted Ethernet) card, etc.

The I/O card may also be, for example, at least one of the following special cards: a current output card, a thermocouple card, a battery simulator, a temperature simulator, a motor card, and an IO_HUB card.

In this embodiment, each I/O unit 51 is directly or indirectly connected to the DUT 6, and the number of the DUT 6 may be one or more. In FIG.6 , the I/O unit 51 is directly connected to the DUT 6 as an example, that is, the DUT 6 is directly connected to the port of each I/O unit 51 through a connector to realize signal transmission; different I/O units 51 may be connected to different pins of the DUT 6 to transmit different information. In another example, a switching matrix may also be provided in the HIL system, and the switching matrix is connected between the I/O unit 51 and the DUT 6, that is, each I/O unit 51 is indirectly connected to the corresponding DUT 6 through the switching matrix.

In one example, the HIL system may further include a cluster control module, or at least one of a plurality of devices (e.g., one of the real-time calculation devices) is used as a cluster service module. The cluster control module in the HIL system may determine the data transmission relationship between at least part of the I/O units 51 and at least part of the IPCs 31 for the current testing task. The cluster control module can be one computer that communicates with each IPC 31, or any IPC 31 may be configured as a cluster control module.

Wherein the data transmission relationship may be understood that: it is used to determine the IPCs 31 and I/O units 51 that need to directly or indirectly share data with each other when executing the corresponding testing tasks, further, it may at least represent: a relationship between one or more IPCs 31 (i.e., at least some of the IPCs 31) and one or more I/O units 51 (i.e., at least some of the I/O units 51) that allows data transmission, that is, it is used to define the IPCs 31 and I/O units 51 that are allowed to transmit data.

In an example, the data transmission relationship may further determine which IPC 31 the data transmitted from the I/O unit 51 should be synchronized to, and which I/O unit 51 the data transmitted from the IPC 31 should be synchronized to, that is, a mapping relationship between the IPC 31 and the I/O unit 51 is defined in detail. Furthermore, the data transmission relationship may define in detail the mapping relationship between the port in the IPC 31 and the port and channel of the I/O unit 51; the port may refer to a hardware port or a software port, address, etc. (for example, an output port or input port of a model running in the IPC); further, when the mapping relationship is described, it is also able to indicate the IPC 31 and the I/O unit 51 that are allowed to transmit data.

In another example, the data transmission relationship is mainly used to define the scope of IPCs 31 and I/O units 51 that are allowed to transmit data, as for which I/O unit 51, DUT or port (port of I/O unit 51 or DUT 6) the IPC should transmit data to when each time data is transmitted, and which IPC 31 or which port of the IPC 31 the data transmitted from the I/O unit 51 should be transmitted to, may be determined by other means.

In addition, if there are a plurality of control modules 4 and different control modules 4 are connected to different I/O units 51, in an example, the data transmission relationship may be understood that: it is at least used to define the scope of the IPC 31 and the I/O unit 51 that are allowed to transmit data in the IPCs 31 and the I/O units 51 connected to the control module 4.

Different data transmission relationships may be determined for different tasks, and different tasks may be executed simultaneously or successively.

After the cluster control module determines the data transmission relationship between at least part of the I/O units 51 and at least part of the IPCs 31, there are a plurality of ways to complete the data transmission between the I/O units 51 and the IPCs 31 based on the data transmission relationship, taking the case where the cluster control module determines the data transmission relationship between K IPCs 31 and L I/O units 51 as an example.

In one example, the cluster control module sends the data transmission relationship to K IPCs 31 respectively, thus when the IPC 31 needs to obtain the target data, it may know which I/O channel of which I/O unit 51 to obtain the target data from based on the data transmission relationship; when it needs to send the target data to the DUT, it may know which I/O channel of which I/O unit 51 to send the target data to; and the connection relationship between the control module 4 and the I/O unit 51 is fixed, so the IPC 31 may know which control module 4 to obtain the required target data from, and also know which control module 4 to send the target data to. Specifically: when each IPC 31 needs to send issued information to the DUT, based on the data transmission relationship, it designates the I/O unit 51 for receiving the respective issued information, and then the control module 4 sends the respective issued information to the DUT via the designated I/O unit 51. In addition, when the DUT needs to send reporting information to the IPC 31, the control module 4 receives the reporting information through L I/O units 51, the I/O units 51 may mark the I/O unit 51 that sends the respective reporting information, so that each IPC 31 may receive the reporting information from the designated I/O unit 51 based on the above data transmission relationship. Wherein, when the reporting information is transmitted between the IPC and the control module, it may be understood as a kind of target data.

Assume that data needs to be transmitted between one IPC 31 and the I/O unit 51 connected to one control module 4, the IPC 31 is recorded as device A, and the control module 4 is recorded as device B.

For example, the address space of each device is preset in the target memory of each device (including the above-mentioned IPC 31 and control module 4), when device A wants to transmit the target data to be shared to device B, it may write the target data into the corresponding address space in the memory of device B, and device B can regularly acquire data from its own corresponding address space in the memory, at this time, if device B wants to write the acquired data into I/O unit 51, in one solution, device A may write the identifier of I/O unit 51 (or its I/O channel) into the shared target data, and device B allocates according to the identifier contained in the data acquired (or its I/O channel); in another solution, different I/O units 51 of device B may be allocated different address subspaces respectively, and device A may write the target data into the corresponding address subspace when sharing the target data, and device B only needs to read it from the address subspace and give it to the corresponding I/O unit 51.

When device A acquires target data from device B, it may also directly acquire data from the corresponding address space or address subspace of device B based on the data transmission relationship, and then give it to the corresponding port of the corresponding model according to the data transmission relationship; the model mentioned herein may refer to the test simulation model running in device A. Or,

When device A acquires target data from device B, device B may also write the target data into the corresponding address space of device A, and device A may periodically acquire the target data from its own corresponding address space in the memory, at this time, if the target data is required to be given to the corresponding model and its port; in one solution, device B may write the identifier of I/O unit 51 (or its I/O channel) into the shared target data, according to this identifier and the data transmission relationship, device A knows which port of which model the data from I/O unit 51 (or its I/O channel) should be given to.

In another example, the cluster control module sends the data transmission relationship to one or more control modules 4 connected to the L I/O units 51, when each IPC 31 needs to send the issued information to the DUT, it directly sends the issued information to the control module 4, and the control module 4 sends the respective issued information to the DUT through the designated IPC 31 based on the data transmission relationship. Similarly, when the DUT needs to send the reporting information to the IPC 31, the control module 4 receives the reporting information through the L I/O units 51, and the control module 4 sends the reporting information from each I/O unit 51 to the designated IPC 31 based on the above data transmission relationship. Wherein, when the issued information is transmitted between the IPC and the control module, it may be understood as a kind of target data.

It can be seen that in order to achieve corresponding communication among the IPCs, the I/O units, and the DUTs, and to achieve the transmission of target data, in the case of providing a switching matrix, it is necessary to configure the switching matrix and the data transmission relationship of the control module. Thus, the data transmission required for testing between the IPC and the DUT, such as the data transmission between the port of the simulation model in the IPC and the port of the DUT, is realized. In this way, the connecting way of the DUT when connected is more flexible and free, and it is only necessary to configure the switching matrix according to the actual connecting situation, for example, after the control module 4 is configured, if the switching matrix is not provided, it is necessary to find out which I/O units the DUT should be connected to and how to connect according to the configuration results, in the case of providing the switching matrix, the DUT may be connected to the switching matrix more freely, and then it is only necessary to configure the switching matrix to achieve the data transmission required for testing.

In addition, other switching circuits, interfaces, etc., such as a DB9 interface, an EDAC interface, a BOB module, etc., may also be provided between the DUT 6 and the I/O unit 51.

It should be noted that the number of control modules 4 in FIG. 6 is one as an example, but is not limited to this. The number of control modules 4 may also be multiple, each control module 4 corresponds to one or more I/O units 51, each I/O unit 51 corresponds to only one control module 4, and each control module 4 is connected to the corresponding I/O unit 51.

As car functions become increasingly complex, data bandwidth increases (cameras, lidar), CPU processing power has exceeded 50,000 DMIPS, and AI computing power has even reached 1,000 TOPS. Traditional isolated single IPCs can no longer meet this test requirement, only through clustering to make more computing resources, CPU resource and bus bandwidth being "pooled" together can the resource bottleneck of simulation be solved. The use of IPC pool in the above solution can effectively solve the problem of resource bottleneck, and the solution of this specification can be applied to solve the resource bottleneck while ensuring the efficient, effective and accurate operation of the test.

It should be noted that when there are a plurality of IPCs 31, the plurality of IPCs 31 sometimes need to cooperate with each other to complete the processing of the HIL test, and this cooperation requires a high degree of synchronization between different IPCs 31 and the control module 4, at this time, the synchronization and accuracy of data transmission between different IPCs 31 and the DUT 6 will significantly affect the test effect and/or test efficiency. For example, when the models running on different IPCs are tested together, the content that needs to be fed back to the DUT at the same or similar time (the corresponding operation instructions may usually be generated at the same or similar time) may be shared in the same or similar first transmission process and second transmission process, and then can be given to the corresponding I/O unit more synchronously. For another example, based on the same reason, the content fed back by the DUT may be shared in the same first transmission process and second transmission process, and then can be given to different IPCs more synchronously. For yet another example, based on the same reason, the content fed back by one IPC may be shared in the same first transmission process and second transmission process, and then can be given to different I/O units more synchronously.

Furthermore, for the above requirements in the HIL scenario, the technical solution of this specification can effectively meet the higher synchronization requirements among devices, in addition to the HIL scenario, other solutions that require synchronization can also use the system in this specification to verify data transmission errors.

This embodiment performs data synchronization on the target memories of a plurality of devices in a cascade structure, providing a reliable basis for data synchronization among devices, at the same time, information verification of the operation request is added during the data synchronization process, thereby being able to promptly detect whether errors occur in the data in the operation request during the transmission process, that is, being able to determine whether the target data is accurately synchronized to the target memory of each device, so as to ensure as much as possible that the device in need can read the accurate target data, which helps to improve the test effect and test efficiency; in addition, an error handling mechanism is also configured, so that when a transmission error occurs in the data in the operation request, countermeasures such as rewriting can be implemented in a timely manner.

Furthermore, for the above requirements in the HIL scenario, the above technical solution can also effectively solve the conflict problem of operations in the same address segment during the synchronization among devices, and meet the higher synchronization requirements among devices, in addition to the HIL scenario, other solutions that require synchronization can also adopt the system in this specification.

The second embodiment of the present application relates to a test system, the main difference between this embodiment and the first embodiment is that the first embodiment uses the cascade connection of a plurality of devices in the test system as an example for explanation, while this embodiment uses the star connection of a plurality of devices in the test system as an example for explanation.

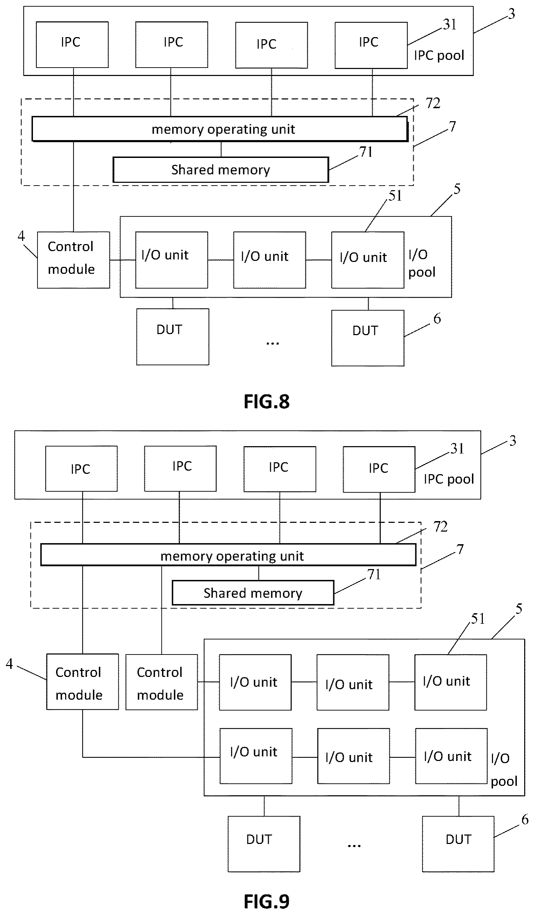

Referring to FIG. 8, the memory in the test system includes a shared memory, for example, the test system includes: a shared memory unit 7, the shared memory unit 7 includes: a shared memory 71 and a memory operating unit 72 that are interconnected, each device 1 is directly or indirectly connected to the memory operating unit 72, in FIG. 8, taking that each device 1 is directly connected to the memory operating unit 72 as an example; wherein the shared memory 71 may be a single DDR memory or a storage pool including a plurality of DDR memories, a part of or all of the DDR memories may be arranged in one cabinet, the DDR memory may also be cross-cabinet, for example, distributed in different cabinets.

The target data are transmitted among the devices 1 by operating the shared memory 71 through the memory operating unit 72, and the target data include the data that needs to be transmitted between the real-time calculation device and the I/O processing device during the HIL test process.

In this embodiment, a plurality of devices 1 are all connected to the shared memory unit 7, so that the plurality of devices 1 are star-connected through the shared memory unit 7, that is, the real-time calculation device and the I/O processing device are star-connected.

The device 1 is used to acquire an operation instruction for operating the shared memory 71, and send the operation instruction to the memory operating unit 72. Wherein, when the device 1 needs to share target data to the selected device or needs to read target data from the selected device, it generates an operation instruction and sends it to the memory operating unit 72; that is, the operation instruction may include an operation instruction of demanding for sharing the target data to one or more selected devices among a plurality of devices 1, or an operation instruction for reading target data from the selected device from the shared memory 71.

The memory operating unit 72 is used to receive operation instructions from the device 1 .

The memory operating unit 72 is also used to execute operation instructions and exchange the target data corresponding to the operation instructions with the shared memory 71.

The memory operating unit 72 is used to execute the received operation instruction when receiving the operation instruction for operating the shared memory 71 from the target device among a plurality of devices 1, and to exchange the target data corresponding to the operation instruction with the shared memory 71; that is, the memory operating unit 72 is used to execute the received operation instruction when receiving the operation instruction for operating the shared memory 71 from any device 1 among a plurality of devices 1, so as to write at least part of the target data into the shared memory 71; or, read at least part of the target data from the shared memory 71, and feed the read target data back to the device 1 that sent the operation instruction.

Specifically, the memory operating unit 72 receives an operation instruction from any one of a plurality of devices 1 (called as the fifth target device), the operation instruction is used to write target data into the shared memory 71 or read at least part of the target data already in the shared memory 71, and the memory operating unit 72 executes the operation instruction sent by the fifth target device, if the operation instruction is used to write target data into the shared memory 71, the operation instruction includes the target data required to be written, and the memory operating unit 72 executes the operation instruction to write the target data included in the operation instruction into the shared memory 71; if the operation instruction is used to read at least part of the target data already in the shared memory 71, the operation instruction includes identification information of the target data required to be read, the identification information represents the device 1 from which the target data originates, the memory operating unit 72 executes the operation instruction, reads the target data corresponding to the identification information in the operation instruction, and feeds the read target data back to the fifth target device that sends the operation instruction; or, the operation instruction includes location information (for example, address range) of the target data required to be read in the shared memory 71, the memory operating unit 72 executes the operation instruction, reads the target data indicated by the location information of the operation instruction in the shared memory 71, and feeds the read target data back to the fifth target device that sends the operation instruction.

In one example, the above system is a HIL system, referring to FIG. 8, the HIL system includes: the above shared memory unit 7, an IPC pool 3, at least one control module 4 and an I/O pool 5.

It should be noted that the relevant layout and connection methods of the IPC 31 in the IPC pool 3, the control module 4 and the I/O unit 51 in the I/O pool 5 in the HIL system of FIG. 8, as well as the setting methods of other components in the HIL system (such as the cluster control module) may refer to the setting methods of the HIL system in FIG. 7, which will not be described one by one here, the two may be used for reference to each other without conflict.

In an example, the IPCs 31 in the IPC pool 3 are communicatively connected to each other, for example, in addition to using a shared memory unit to realize data sharing, they may also be connected together through Ethernet communication to transmit other data besides the target data.

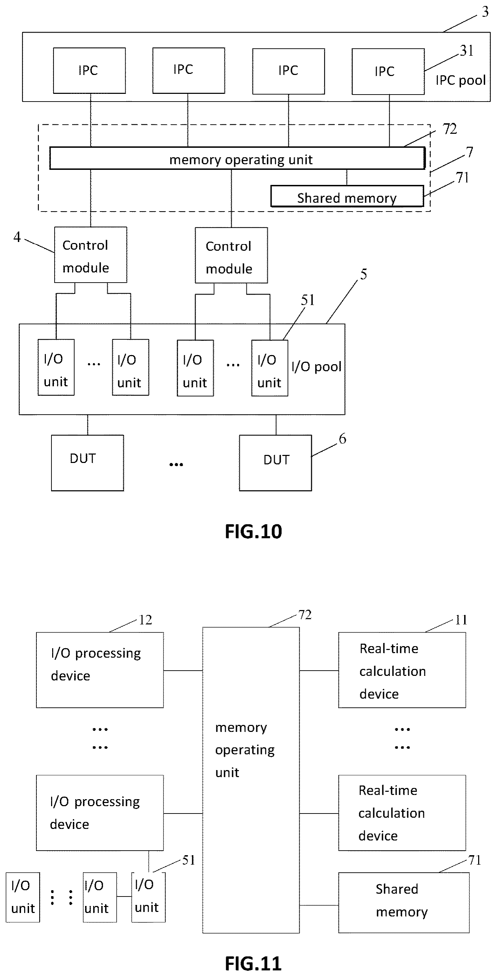

It should be noted that the number of control modules 4 being one is taken as an example in FIG. 8, but it is not limited to this, the number of control modules 4 may also be multiple, each control module 4 corresponds to one or more I/O units 51, each I/O unit 51 corresponds to only one control module 4, and each control module 4 is connected to the corresponding I/O units 51; for the current testing task, each control module 4 can determine the data transmission relationship corresponding to itself. Taking any control module 4 as an example, the data transmission relationship determined by the control module 4 defines the data transmission relationship between at least part of the IPC 31 and all the target I/O units. The target I/O unit is the I/O unit corresponding to this control module 4, that is, the control module 4 determines which IPC 31 the data transmitted from each target I/O unit should be synchronized to, and which target I/O unit the data transmitted from the IPC 31 should be synchronized to. Wherein, each control module 4 may be connected to the corresponding I/O units 51 in a cascade manner, as shown in FIG. 9, the number of control modules 4 being 2 and each control module 4 corresponding to 3 I/O units 51 is taken as an example; or each control module 4 is directly connected to the corresponding I/O units 51, as shown in FIG. 10, the number of control modules 4 being 2 and each control module 4 corresponding to a plurality of I/O units 51 is taken as an example.

In one example, two levels of arbitration of operation instructions may be added, as follows:
First-level arbitration: The device 1 is used to send the operation instructions to the memory operating unit 72 in sequence according to the order in which the operation instructions are acquired. That is, when each device 1 needs to send the operation instructions to the memory operating unit 72, it selects the operation instruction firstly acquired from all the operation instructions to be sent and sends it to the memory operating unit 72. Wherein, each device 1 may send the next operation instruction to the memory operating unit 72 after receiving the execution result of the operation instruction currently sent to the memory operating unit 72.

In one example, the device 1 may send the operation instructions to the memory operating unit 72 in time order according to the acquired timestamps of the operation instructions. That is, when each device 1 generates an operation instruction, it adds the timestamp when the operation instruction is generated into the operation instruction, so that each device 1 can select the operation instruction with the smallest timestamp and send it to the memory operating unit 72 by comparing the timestamps of all the operation instructions to be sent.

In another example, the device 1 is used to add each acquired operation instruction into the first queue in sequence, and send the operation instructions to the memory operating unit 72 in sequence according to the order of the operation instructions in the first queue. That is, each device 1 is provided with a first queue for placing operation instructions, and when each device 1 generates an operation instruction, it places the operation instruction at the end of the first queue, and when each device 1 sends the operation instruction to the memory operating unit 72, it sends the first operation instruction in the first queue to the memory operating unit 72.

Secondary arbitration: The memory operating unit 72 is used to execute the received operation instructions in sequence according the order in which the operation instructions are received. That is, when the memory operating unit 72 executes an operation instruction, it selects the operation instruction firstly acquired from all the operation instructions to be executed for executing for executing.

In one example, the memory operating unit 72 is used to execute the operation instructions in time order according to the received timestamps of the operation instructions. That is, when the memory operating unit 72 needs to execute an operation instruction, it compares the timestamps of all the operation instructions to be executed and selects the operation instruction with the smallest timestamp for executing.

In another example, the memory operating unit 72 is used to sequentially add each received operation instruction to a second queue in sequence, and execute the operation instructions in sequence according to the order of the operation instructions in the second queue. That is, the memory operating unit 72 is provided with a second queue for placing operation instructions, when the memory operating unit 72 receives each operation instruction, it places the operation instruction at the end of the second queue, when the memory operating unit 72 needs to execute the operation instruction, it selects the first operation instruction in the second queue for executing.

In addition, the memory operating unit 72 may also set the executing order of the operation instructions according to a set rule (e.g., read first and then write, or write first and then read, etc.).

In this embodiment, the first-level arbitration is added when each device sends the operation instructions to the memory operating unit, each device sends the operation instruction firstly acquired to the memory operating unit, that is, the operation instructions sent by each device to the memory operating unit are all the operation instructions currently to be processed; then the second-level arbitration is added when the memory operating unit executes the operation instruction, and the memory operating unit selects the operation instruction firstly acquired to execute according to the order in which the operation instructions are received; that is, it is avoided that all operation instructions are arbitrated by the memory operating unit and then executed in sequence. The workload of the memory operating unit is reduced through the second-level arbitration, which helps to improve the work efficiency of the memory operating unit and improve the overall test efficiency of the test system.

In this embodiment, taking any one device 1 (referred to as a sixth target device) among a plurality of devices 1 as an example, when the sixth target device needs to share the designated target data to at least one seventh target device among the plurality of devices 1, that is, when the sixth target device acquires the designated target data that needs to be shared to at least one seventh target device among the plurality of devices, it firstly generates a target operation instruction for writing the designated target data, and sends the target operation instruction to the memory operating unit 72. Wherein, the sixth target device may be an IPC 31 or a control module 4, and the seventh target device to which the sixth target device needs to share the designated target data may also be an IPC 31 or a control module 4, and the number of the seventh target devices may also be one or more.

The memory operating unit 72 is used to execute the target operation instruction after receiving the target operation instruction to write the designated target data into the shared memory 71.

The seventh target device is used to read designated target data from the shared memory 71 through the memory operating unit 72.

For example, the seventh target device is used to read at least part of the required designated target data from the shared memory 71 regularly through the memory operating unit 72 according to a set period, so as to read the designated target data after the designated target data has been written into the shared memory; for example, the shared memory 71 defines a storage address range corresponding to each device 1, and each device 1 periodically reads the data in the corresponding storage address range in the shared memory 71, thereby each device 1 is able to read the target data shared by other devices 1 from the shared memory 71 through the memory operating unit 72.

For another example, the seventh target device is used to read at least part of the designated target data from the shared memory 71 through the memory operating unit 72 when at least part of the designated target data is required for HIL testing; for example, the seventh target device is used to run a test simulation model during the testing process, and it needs to use at least part of the designated target data in the process of running the test simulation model, and reads the required designated target data from the shared memory 71 through the memory operating unit 72.

In this embodiment, the device 1 is also used to read designated target data from the shared memory 22 through the memory operating unit 21 to determine whether the target operation instruction is executed successfully, and when determining that the target operation instruction fails to be executed, send the target operation instruction to the memory operating unit 21 again, specifically: re-add the target operation instruction into the arbitration, so as to send it to the memory operating unit 21 again until the target operation instruction is executed successfully.

In another example, after executing the target operation instruction, the memory operating unit 72 feeds the execution result of the target operation instruction back to the sixth target device that sends the target operation instruction.

The sixth target device is used to send the designated target data to the seventh target device through the memory operating unit 72 when receiving the execution result of the target operation instruction and the designated target data is written completely.

The sixth target device sends the designated target data to the seventh target device through the memory operating unit 72 in the following two ways:
In a first way, the sixth target device is used to generate a trigger event for sharing designated target data to the seventh target device and send the trigger event to the memory operating unit 72.

The memory operating unit 72 is used to generate an interrupt instruction instructing to read designated target data in response to the trigger event, and send the interrupt instruction to the seventh target device.

The seventh target device is used to generate a read request for reading designated target data in response to the interrupt instruction and feed the read request back to the memory operating unit 72.

The memory operating unit 72 is further used to read the designated target data from the shared memory 71 based on the read request and send the data to the seventh target device.

In a second way, the sixth target device is used to feed notification information indicating that writing of the designated target data is completed back to the memory operating unit 72.

The memory operating unit 72 is used for reading the designated target data from the shared memory 71 and feeding the specified target data back to the seventh target device after receiving the notification information.

In one example, the test system in this embodiment can also implement the following process; the test system may also be the HIL system shown in FIGS. 8 to 10, and this embodiment does not impose any limitation on this.

Taking the test system in FIG.8 as an example, referring to FIG.11, which is a simplified diagram of the test system in FIG.8, a plurality of devices 1 included in the test system comprise at least one real-time calculation device 11 and at least one I/O processing device 12 (only a plurality of real-time calculation devices 11 and a plurality of I/O processing devices 12 are illustrated in FIG.11); the I/O processing device 12 is connected to at least one I/O unit 1, and the I/O unit 1 is directly or indirectly connected to the DUT (the DUT is not shown in the figure). Wherein, one I/O processing device 12 may exchange data with one or more I/O units 1, for example, the I/O units 1 are respectively connected to different terminals of the I/O processing device 12; for another example, the I/O units 1 are first cascaded and then connected to the I/O processing device 12 (this embodiment and the subsequent embodiments all take the I/O units 1 being cascaded as an example), and communicate through EtherCAT Ethernet and other ways. Regardless of how the connection is made, the interaction between the I/O processing device 12 and the I/O unit 1 can be realized in the end, the I/O processing device 12 and the I/O unit 1 may be directly connected, or may be connected through other circuits. The I/O unit 1 is used to connect the DUT, and the number of the DUT connected to the entire test system at the same time may be one or more.

Any first device among a plurality of devices 1 is used to acquire an operation instruction for performing a first write operation on the shared memory 71, and send the operation instruction of the first write operation to the memory operating unit 72; the first write operation is used to write first target data into the shared memory 71; the target data includes the first target data, and the first target data is data that needs to be shared between the first device and a second device among a plurality of devices during the process of testing the DUT.

The second device is used to acquire the operation instruction for performing the first read operation on the shared memory 71, and send the operation instruction of the first read operation to the memory operating unit 72; the first read operation is used to read the first target data from the shared memory 71.

The first device is any one device 1 among a plurality of devices 1, which may be a real-time calculation device 11 or an I/O processing device 12; when the first device needs to transmit the target data to the second device, it generates an operation instruction for writing the first target data into the shared memory 71, and sends the operation instruction to the memory operating unit 72, the first target data is the data that needs to be transmitted between the first device and at least one second device among a plurality of devices 1 during the testing process.

The second device may also be a real-time calculation device 11 or an I/O processing device 12. The number of second devices may be one or more. If the number of second devices is multiple, they may include a real-time calculation device 11 and/or an I/O processing device 12; that is, the first target data may be data that needs to be transmitted among a plurality of real-time calculation devices 11, or data transmitted between the real-time calculation device 11 and the I/O processing device 12, or data transmitted among a plurality of I/O processing devices 12.

In one example, the target data includes second target data, and any third device among a plurality of devices is used to acquire an operation instruction for performing a second write operation on the shared memory, and send the operation instruction of the second write operation to the memory operating unit; the second write operation is used to write the second target data into the shared memory; the second target data is data that needs to be shared between the third device and a fourth device among a plurality of devices during the testing of the DUT, and the fourth device is configured with a local memory.

The third device is any device 1 among a plurality of devices 1, which may be a real-time calculation device 11 or an I/O processing device 12; when the third device needs to transmit the second target data to the fourth device, it generates a write operation instruction for writing the second target data into the shared memory 71, and sends the write operation instruction to the memory operating unit 72. The second target data is data that needs to be transmitted between the third device and at least one fourth device among a plurality of devices 1 during the testing process.

The fourth device may also be a real-time calculation device 11 or an I/O processing device 12, the number of the fourth devices may be one or more, if the number of the fourth devices is multiple, they may include a real-time calculation device 11 and/or an I/O processing device 12; that is, the second target data may be data that needs to be transmitted among a plurality of real-time calculation devices 11, or data transmitted between the real-time calculation device 11 and the I/O processing device 12, or data transmitted among a plurality of I/O processing devices 12.

After receiving the operation instruction for performing the second write operation on the shared memory, the memory operating unit 72 causes the second target data to be stored in the local memory of at least one designated device among a plurality of devices, and the at least one designated device includes the fourth device. Specifically, the memory operating unit 72 sends the operation instruction for performing the second write operation on the shared memory or the second target data corresponding to the operation instruction to at least one designated device, and the designated device includes the fourth device mentioned above, and the designated devices are all configured with local memory. That is, the memory operating unit 72 will send the operation instruction for performing the second write operation on the shared memory or the second target data corresponding to the operation instruction to the designated device, and the designated device includes the fourth device that needs to receive the second target data.

That is, the memory operating unit 72 may directly write the second target data into the local memory of each designated device, or forward the operation instruction to each designated device, and each designated device executes the operation instruction to store the second target data into the configured local memory of each designated device. If the designated device includes a fourth device required to receive the second target data, the second target data is also stored in the local memory of the fourth device. During the testing process, if the fourth device needs to use part or all of the second target data, it may directly read at least part of the required second target data from the local memory of the fourth device. For example, the fourth device may read all the data required for testing from the local memory, but is not limited to this, and may also read part of the data required for testing from the local memory at the local, and read the other part of the data required for testing from the shared memory 71 through the memory operating unit 72.

In addition, the memory operating unit 72 also receives the execution operation instruction to write the second target data into the shared memory 71; that is, the shared memory 71 also stores the second target data required for testing.

Thus, at least one fifth device among the plurality of devices 1 is used to read at least part of the target data required for testing from the shared memory 71 through the memory operating unit 72. The fifth device is any device 1 among the plurality of devices 1, which may be a device 1 configured with a local memory or a device 1 not configured with a local memory, and may read the target data from the shared memory 71 through the memory operating unit 72 when the target data needs to be read during the test.

In this embodiment, the local memory may be configured in some or all of the devices 1 included in the test system; for example, if some devices need to frequently read certain fixed data, the local memory may be configured in these devices, and these fixed data may be stored in the local memory of the devices respectively. Wherein, the local memory can be understood as the local internal memory of the device. The local internal memory can be a memory located in the device or a memory external to the device. As long as the writing and reading of data are implemented locally, it may be understood as the local internal memory. In the above process, the designated device receiving the target data needs to include a local memory to store the target data in the local memory of the designated device.

The memory operating unit 72 is used to store the second target data in the local memory of at least one designated device among a plurality of devices 1 when the second target data corresponding to the operation instruction meets the preset condition. That is, during the testing process, whether the memory operating unit 72 sends the received operation instruction (or the second target data corresponding to the operation instruction) to the designated device depends on whether the second target data corresponding to the operation instruction meets the preset condition, and the preset condition defines whether the second target data needs to be sent to the designated device.

In one example, when acquiring the second target data that needs to be shared with the fourth device, the third device may first judge whether the second target data meets the preset conditions, and send an indication information representing whether the second target data meets the preset conditions together with the operation instruction for performing the second write operation on the shared memory to the memory operating unit 72. The memory operating unit 72 may then determine whether the second target data meets the preset conditions based on the indication information, and upon receiving the first indication information representing that the second target data meets the preset conditions, determine that the target data needs to be sent to the designated device; upon receiving the indication information representing that the second target data does not meet the preset conditions, determine that the second target data does not need to be sent to the designated device.

In another example, when receiving an operation instruction, the memory operating unit 72 independently judges whether the second target data meets the preset condition, when determining that the second target data meets the preset condition, determines that the second target data needs to be sent to the designated device; and when determining that the second target data does not meet the preset condition, determines that the second target data does not need to be sent to the designated device. For example, when receiving each operation instruction, the memory operating unit 72 first judges whether the operation instruction is a write operation instruction, and if so, it then judges whether the operation instruction meets the preset condition.

In the above two ways, the preset conditions include any one or any combination of the following:
The second target data is derived from a first designated device in at least one real-time calculation device or a first designated port of the real-time calculation device;
The second target data needs to be sent to a second designated device in at least one real-time calculation device or a second designated port of the real-time calculation device;
The second target data is data that needs to be transmitted between the real-time calculation devices;
The second target data is derived from a first designated I/O unit in the at least one I/O unit or a third designated port of the I/O unit;
The second target data needs to be sent to a second designated I/O unit in the at least one I/O unit or a fourth designated port of the I/O unit;
The second target data is used to be written into the designated address;
The second target data is data including a preset identifier; the preset identifier is used to represent information such as the type, use, format, source, and purpose of the data;
The second target data is located in the first preset data list;
The second target data is outside the second preset data list;
The acquisition frequency of the second target data is less than the preset frequency threshold; that is, the second target data whose acquisition frequency is less than the preset frequency threshold is determined to meet the preset condition, and the second target data whose acquisition frequency reaches the preset frequency threshold is determined to not meet the preset condition. The acquisition frequency may refer to the frequency at which the real-time calculation device generates the second target data, the frequency at which the memory operating unit receives the second target data, or the frequency at which the I/O processing device acquires the reporting data of the I/O units; but not limited to this, and the second target data whose acquisition frequency is greater than the set threshold may also be determined to not meet the preset condition, and the second target data whose acquisition frequency is less than the preset threshold may be determined to meet the preset condition.

When the second target data needs to be sent to a plurality of fourth devices, that is, when shared objects of the second target data is multiple, it is determined that the second target data meets the preset condition; otherwise, it is determined that the second target data does not meet the preset condition.

It should be noted that the above-mentioned various preset conditions can be used in combination with each other without conflict.

In one embodiment, the memory operating unit 72 is further used to: refuse to transmit the second target data or the operation instruction to a preset port, so that the second target data cannot be written into the local memory of a preset device among a plurality of devices through the preset port. The preset port is the port where the memory operating unit 72 is connected to the preset device. The preset device is a device configured with a local memory, which may be a real-time calculation device or an I/O processing device. When receiving the operation instruction, if it is determined that the operation instruction or the second target data corresponding to the operation instruction needs to be sent to the preset device through the preset port, the memory operating unit 72 refuses to send, and the second target data will not be stored in the local memory of the preset device.

The test system includes P devices (P is greater than 1), and a plurality of devices 1 are devices among the P devices that are divided to perform the current testing task, and may be all or part of the P devices. In addition, the test system may also execute a plurality of current testing tasks in parallel, and then, for different current testing tasks, the plurality of devices 1 divided may be different, overlapping, or even the same, which is related to the computing resources provided by the device and the needs of the user.

When determining that the second target data needs to be sent to the designated device, the memory operating unit 72 also needs to determine the designated device that receives the operation instruction or the second target data corresponding to the operation instruction; that is, determine which designated devices the operation instruction or the second target data corresponding to the operation instruction needs to be broadcast to for local storage. All designated devices are devices configured with local memory, including a fourth device to which the second target data needs to be transmitted.

In an example, the memory operating unit 72 is use to determine at least one designated device from a plurality of devices when determining that the second target data needs to be sent to the designated device, and send the second target data to the designated devices.

In another example, after acquiring the operation instruction, the third device determines at least one designated device from a plurality of devices, and sends second indication information representing the at least one designated device determined by the third device to the memory operating unit 72, that is, the second indication information designates the object to receive the second target data. The memory operating unit 72 may acquire the designated devices to which the second target data needs to be sent from the second indication information, and send the second target data to these designated devices.

In the above two ways, the way in which the third device or the memory operating unit 72 determines at least one designated device from a plurality of devices is any one of the following:
At least one designated device is all devices among a plurality of devices, and all devices used to execute the current testing task are used as the designated devices; specifically, at least part of the P devices in the test system are divided to execute the current testing task, and this part of the devices executing the current testing task are all used as designated devices (also including a third device that issues an operation instruction).

At least one designated device is a real-time calculation device; that is, all real-time calculation devices in a plurality of devices executing the current testing task are designated devices.

The third device is a real-time calculation device, and the at least one designated device includes all I/O processing devices in the plurality of devices. That is, in the plurality of devices executing the current testing task, the second target data from the real-time calculation device is stored in the local memory of the I/O processing device.

The third device is an I/O processing device, and the at least one designated device includes all real-time calculation devices in the plurality of devices. That is, in the plurality of devices executing the current testing task, the second target data from the I/O processing device is stored in the local memory of the real-time calculation device.

The at least one designated device includes a device corresponding to the second target data in a plurality of devices, that is, only the fourth device that needs the second target data is used as the designated device.

It should be noted that the above plurality of ways of selecting designated devices can be used in combination with each other without conflict. In addition, in the above example, the test system executes one current testing task, if the current testing task is completed and the next testing task is started, the devices selected from the P devices to execute the testing task and/or the designated devices in the devices executing the testing task may all be changed. If the test system executes a plurality of testing tasks at the same time, the designated devices in the devices executing the testing tasks may all be selected in the above way.

For each designated device, when it receives the operation instruction sent by the memory operating unit 72 or the second target data corresponding to the operation instruction, it may directly store the second target data in the local memory, or it may also determine whether the second target data is the required data and only store the required second target data locally.

In one example, the designated device is configured to prohibit performing the writing operation on the local memory of the designated device, or: configured to prohibit performing the writing operation on the target address space of the local memory of the designated device, the target address space including the storage address for storing the second target data. That is, in the designated device, its local memories may all be used to store the second target data, or a target address space may be divided from the local memory to be dedicated to storing the second target data, but it only supports the shared memory to write data into the local memory of the designated device or the target address space of the local memory, and the designated device also prohibits performing the write operation on the local memory or the target address space of the local memory, thereby ensuring the consistency of data in the local memories of the respective designated devices.

Furthermore, at least one designated device further includes a third device; the third device is further used to read the second target data from the local memory of the third device. That is, if the third device is configured with a local memory, when it needs to read the second target data required for the target test during the testing process, it also needs to read it from the local memory at the local.

For the fourth device, it will store the second target data in the local memory at the local; if all the data required by the fourth device are stored in the local memory at the local, when needing to read the second target data, the fourth device may read it from the local memory at the local; if only part of the data required by the fourth device is stored in the local memory, when the fourth device needs to read the specified data required for testing, it first determines whether to read the specified data from the local memory of the fourth device, if it is determined to read the specified data from the local memory of the fourth device, the specified data is read from the local memory; if it is determined not to read the specified data from the local memory of the fourth device, the specified data is read from the shared memory through the memory operating unit.

Wherein, the fourth device determines whether to read the specified data from the local memory or from the shared memory in the following way:
When the specified data is located in the preset data range, it is determined to read the specified data from the local memory of the fourth device, that is, each device presets the data that can be read from the local memory in advance, and then determines where to read the data required for testing from accordingly, for example, according to the data type, one or more types of data are configured to be read from the local memory, and other types of specified data are configured to be read from the shared memory through the memory operating unit 72; at this time, it is also necessary to cooperate with the preset conditions of the second target data, such as to configure these types of data to be sent to the designated device, or not to limit the type of the second target data.

When the specified data is the second target data stored in the local memory, it is determined to read the specified data from the local memory of the fourth device, that is, each device will record the data stored in its local memory, and determine that these data are read from the local, when the specified data needs to be read, it firstly judges whether the specified data is the data stored locally, if so, read the specified data from the local memory; if not, read the specified data from the shared memory.
when the current time is within the specified time range of the specified data, it is determined to read the specified data from the local memory of the fourth device.

Exemplarily, it may also be configured in the following way: for each device in the test system, when it is necessary to read the specified data required for testing, if the device is configured with a local memory and the second target data has been written into the local memory, the specified data is read from the local memory; if the device is not configured with a local memory or the second target data has not been written into the local memory configured in the device, the specified data is read from the shared memory through the memory operating unit. That is, for each device in the test system, if it stores the second target data locally, it only reads the specified data required for testing from the local; if it does not store the second target data locally, it needs to read the specified data from the shared memory through the memory operating unit.

During the testing process, the device equipped with local memory in the test system may directly read at least part of the data required for testing from the local memory, effectively improving the data reading efficiency; in particular, for data that needs to be repeatedly read by a plurality of devices (which may include real-time calculation devices and/or I/O processing devices), these plurality of devices may read these data directly from the local memory without having to read from the shared memory through the memory operating unit, effectively reducing the processing load of the memory operating unit and helping to improve the processing efficiency of the memory operating unit.

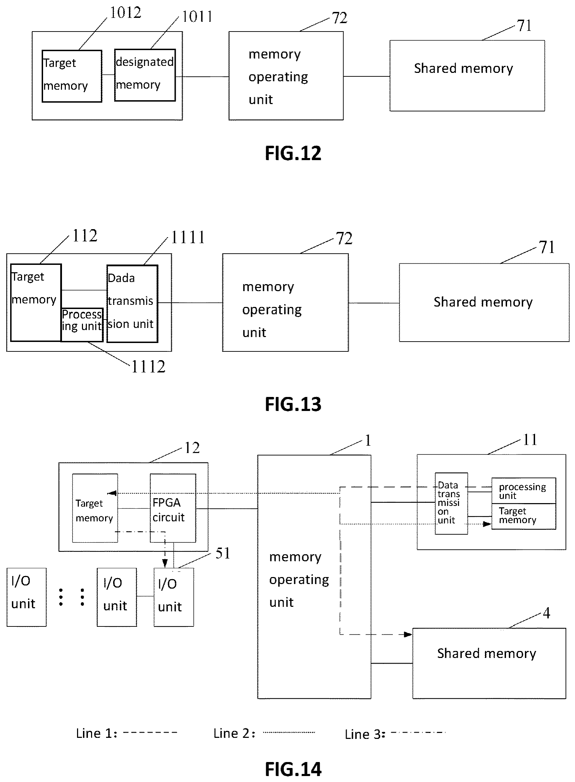

In one example, referring to FIG.12, the fourth device configured with the local memory includes: a designated module 1011 and a local memory 1012 that are communicatively connected to each other; the designated module 1011 is used to receive operation instructions or target data from the memory operating unit 72, send the target data to the local memory of the fourth device for storage, and read at least part of the target data required for testing from the local memory 1012.

In some examples, the designated module 1011 may be an FPGA circuit or an ASIC circuit, that is, the target data is stored in or read from the local memory 1012 by the FPGA or ASIC.

In another example, referring to FIG.13, the designated module 1011 includes: a data transmission unit 10111 and a processing unit 10112, the data transmission unit 10111 is respectively communicatively connected to the processing unit 10112 and the local memory 1012; wherein the processing unit 10112 may be a CPU processor.

The data transmission unit 10111 is used to receive operation instructions or target data from the memory operating unit 72, and send the target data to the local memory of the fourth device for storage.

The processing unit 11 is used to read at least part of the target data required for testing from the local memory of the fourth device.

Referring to FIG.14, it is taken as an example that the third device is a real-time calculation device 11 and the fourth device is an I/O processing device 12 , wherein the real-time calculation device 11 includes the data transmission unit, the processing unit and the local memory, and the designated module of the I/O processing device 12 is an FPGA circuit, and the FPGA circuit is connected to one or more I/O units 1.

If the real-time calculation device 11 has target data X that needs to be shared to at least one designated I/O unit among the I/O units connected to the I/O processing device 12, the real-time calculation device 11 firstly generates an operation instruction RX for writing the target data X into the shared memory 71, and sends the operation instruction RX to the memory operating unit 72 through the data transmission unit, after receiving the operation instruction RX, the memory operating unit 72 acquires the designated device that needs to receive the operation instruction RX, and the designated device at least includes the I/O processing device 12, for example, the memory operating unit 72 in FIG. 12 can simultaneously send the operation instruction RX (or target data X) to the real-time calculation device 11 (the data transmission unit) and the I/O processing device 12 (the FPGA circuit), the data transmission unit in the real-time calculation device 11 can directly store the target data X in the local memory connected thereto, and the FPGA circuit of the I/O processing device 12 will also store the target data X in the local memory connected thereto; when the I/O processing device 12 needs to use the target data X, its FPGA circuit reads the target data X from the local memory and sends the target data X to the designated I/O unit, the target data X may be the data required by the designated I/O unit or the data required by the DUT connected to the designated I/O unit.

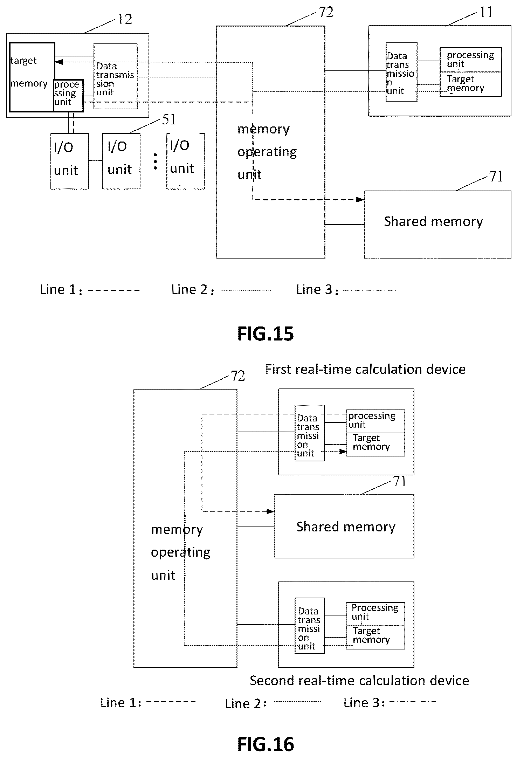

Referring to FIG.15, it is taken as an example that the third device is the I/O processing device 12 and the fourth device is the real-time calculation device 11, wherein the real-time calculation device 11 includes a data transmission unit, a processing unit and a local memory, and the I/O processing device 12 includes: a data transmission unit, a processing unit and a local memory, and the processing unit is connected to one or more I/O units 1.

The designated I/O unit in the I/O unit 1 connected to the processing unit of the I/O processing device 12 needs to share target data Y to the real-time calculation device 11, the target data Y may be the data generated by the designated I/O unit or the data generated by the DUT connected to the designated I/O unit; the processing unit of the I/O processing device 12 acquires the target data Y from the designated I/O unit, generates an operation instruction RY for writing the target data Y into the shared memory 71, and sends the operation instruction RY to the memory operating unit 72 through the data transmission unit, after receiving the operation instruction RY, the memory operating unit 72 acquires the designated device that needs to receive the operation instruction RY, the designated device at least includes the real-time calculation device 11, for example, the memory operating unit 72 in FIG.15 can simultaneously send the operation instruction RY (or the target data Y) to the real-time calculation device 11 (the data transmission unit) and the I/O processing device 12 (the data transmission unit), the data transmission unit in the real-time calculation device 21 can directly store the target data Y in the local memory connected thereto, and the data transmission unit of the I/O processing device 12 can directly store the target data Y in the local memory connected thereto, when the real-time calculation device 21 needs to use the target data Y, its processing unit reads the target data Y from the local memory at the local.

Referring to FIG.16, it is taken as an example that the third device is a real-time calculation device, denoted as the first real-time calculation device, and the fourth device is a real-time calculation device, denoted as the second real-time calculation device, wherein the first real-time calculation device includes a data transmission unit, a processing unit and a local memory, and the second real-time calculation device includes: a data transmission unit, a processing unit and a local memory.

The first real-time calculation device needs to share target data Z to the second real-time calculation device, the processing unit of the first real-time computing generates an operation instruction RZ for writing the target data Z into the shared memory 71, and sends the operation instruction RZ to the memory operating unit 72 through the data transmission unit, after receiving the operation instruction RZ, the memory operating unit 72 acquires the designated device that needs to receive the operation instruction RZ, the designated device at least includes the second real-time calculation device, for example, the memory operating unit 72 in FIG. 16 can simultaneously send the operation instruction RZ (or target data Z) to the first real-time calculation device (data transmission unit) and the second real-time calculation device (data transmission unit), the data transmission unit in the first real-time calculation device can directly store the target data Z in the local memory connected thereto, and the data transmission unit of the second real-time calculation device can directly store the target data Z in the local memory connected thereto; when the second real-time calculation device needs to use the target data Z, its processing unit reads the target data Z from the local memory.

It should be noted that FIG.16 takes the third device and the fourth device both being real-time calculation devices as an example, realizing data sharing between real-time calculation devices. Exemplarily, the third device and the fourth device may also both be I/O processing devices, and data sharing between I/O units may be realized, wherein the function of the designated module realized by combination of the data transmission unit and the processing unit may also be realized by FPGA circuit or ASCI circuit, the specific data sharing process is similar and will not be repeated here.

It should be noted that the drawings of this embodiment and the following embodiments only exemplify the third device and the fourth device that needs to transmit the target data, and the number of devices in the test system, but not limit to this. In addition, Line 1 in the drawings represents the path for writing data, Line 2 represents the path for the memory operating unit sending the operation instructions or the target data corresponding to the operation instructions to the designated device, and Line 3 represents the path for reading data.

It can be seen that the above-mentioned data transmission unit is, for example, an IO hub; it can be used to transmit operation instructions (mainly refers to transmitting the operation instructions to the memory operating unit), and transmit data read by the memory operating unit (mainly refers to transmitting the read data to the corresponding device), on this basis, the data transmission unit can also arbitrate the transmission order of the received operation instructions and the output operation instructions, and store data in the local memory connected thereto.

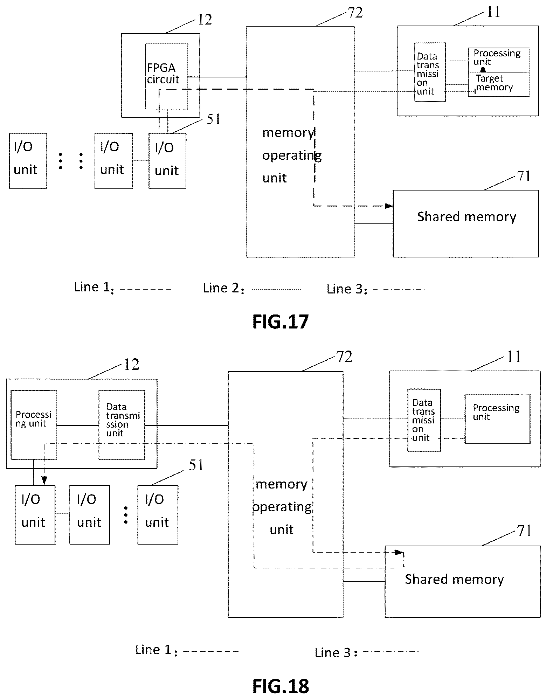

In some embodiments, referring to FIG. 17, the I/O processing device 12 as the third device is not configured with a local memory, wherein the designated module is an FPGA circuit, the processing unit is connected to one or more I/O units 1, and the real-time calculation device 11 includes a data transmission unit, a processing unit, and a local memory; the I/O processing device 12 can also store target data K in the local memory of the real-time calculation device 11 in a similar way, and the specific process is as follows:
The designated I/O unit in the I/O unit 1 connected to the FPGA circuit of the I/O processing device 12 needs to share the target data K to the real-time calculation device 11, the target data K may be data generated by the designated I/O unit or data generated by the DUT connected to the designated I/O unit. The FPGA circuit of the I/O processing device 12 acquires the target data K from the designated I/O unit, generates an operation instruction RK for writing the target data K into the shared memory 71, and sends the operation instruction RK to the memory operating unit 72, after receiving the operation instruction RK, the memory operating unit 72 acquires the designated device that needs to receive the operation instruction RK, since the I/O processing device 12 is not configured with the local memory, the memory operating unit 72 in FIG.17 only sends the operation instruction RK (or target data K) to the real-time calculation device 11 (data transmission unit), and the data transmission unit in the real-time calculation device 21 can directly store the target data K in the local memory connected thereto; when the real-time calculation device 21 needs to use the target data K, its processing unit reads the target data K from the local memory at the local.

In this embodiment, for data that cannot be read from the local memory at the local or for devices that are not configured with local memory at the local, the required data must be read from the shared memory through the memory operating unit, which is explained below, wherein it is taken as an example that neither the third device nor the fourth device is configured with local memory at the local, even if the third device and the fourth device are both configured with local memory at the local, the required data can be read from the shared memory in the following way.

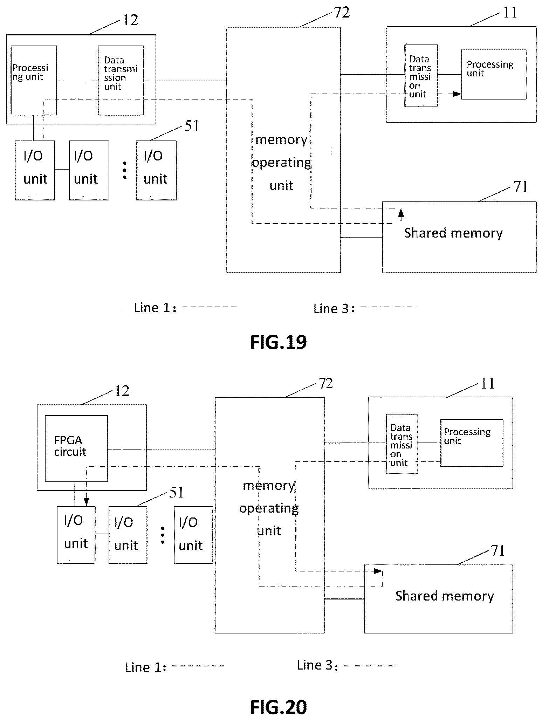

As shown in FIG. 18 and FIG.19, the real-time calculation device 11 includes a data transmission unit and a processing unit, and the I/O processing device 12 includes: a data transmission unit and a processing unit, and the processing unit is connected to one or more I/O units 1.

In FIG.18, the real-time calculation device 11 shares data A1 to the designated I/O unit connected to the I/O processing device 12, for example, the specific process is that: the processing unit of the real-time calculation device 11 can generate data A1 that needs to be sent to the designated I/O unit during the test, and generate an operation instruction RA1 (which may be one or more operation instructions) for writing the data A1 into the shared memory 71, after the processing unit transmits the operation instruction RA1 to the corresponding data transmission unit, the data transmission unit can transmit the operation instruction RA1 to the memory operating unit 72, and then the memory operating unit 72 can write the data A1 into the shared memory 71 by executing the operation instruction RA1.

After the data A1 is written into the shared memory 71, when the data A1 needs to be transmitted to a designated I/O unit so as to send the data A1 (or other data acquired by the designated I/O unit based on the data A1) to the DUT, the I/O processing device 12 corresponding to the designated I/O unit is necessary to read the data A1, at this time, the processing unit of the I/O processing device 12 can generate an operation instruction RdA1 (which may be one or more operation instructions) for reading the data A1, after the processing unit transmits the operation instruction RdA1 to the corresponding data transmission unit, the data transmission unit can transmit the operation instruction RdA1 to the memory operating unit 72, and then, the memory operating unit 72 can read data A1 from the shared memory 71 by executing the operation instruction RdA1 to return it to the data transmission unit of the I/O processing device 12, and return it to the corresponding processing unit through the data transmission unit, the processing unit can transmit the data A1 to the corresponding designated I/O unit, and the designated I/O unit can send the data A1 (or other data acquired by the designated I/O unit based on data A1) to the DUT.

In FIG.19, the I/O processing device 12 shares data A2 to the real-time calculation device 11, for example, the specific process is that: the processing unit of the I/O processing device 12 acquires the data A2 generated by the DUT acquired by the designated I/O unit (or the data A2 generated by the designated I/O unit), and generates an operation instruction RA2 (which may be one or more operation instructions) for writing the data A2 into the shared memory 71, after the processing unit transmits the operation instruction RA2 to the corresponding data transmission unit, the data transmission unit can transmit the operation instruction RA2 to the memory operating unit 72, and then the memory operating unit 72 can write the data A2 into the shared memory 71 by executing the operation instruction RA2.

After the data A2 is written into the shared memory 71, in the case that the data A2 needs to be transmitted to the real-time calculation device 11, the real-time calculation device 11 needs to read the data A2, at this time, the processing unit of the real-time calculation device 11 can generate an operation instruction RdA2 (which can be one or more operation instructions) for reading data A2, after the processing unit transmits the operation instruction RdA2 to the corresponding data transmission unit, the data transmission unit can transmit the operation instruction RdA2 to the memory operating unit 72, and then, the memory operating unit 72 can read the data A2 from the shared memory 71 to return it to the data transmission unit of the real-time calculation device 11 by executing the operation instruction RdA2, so that the processing unit of the real-time calculation device 11 can acquire the data A2.

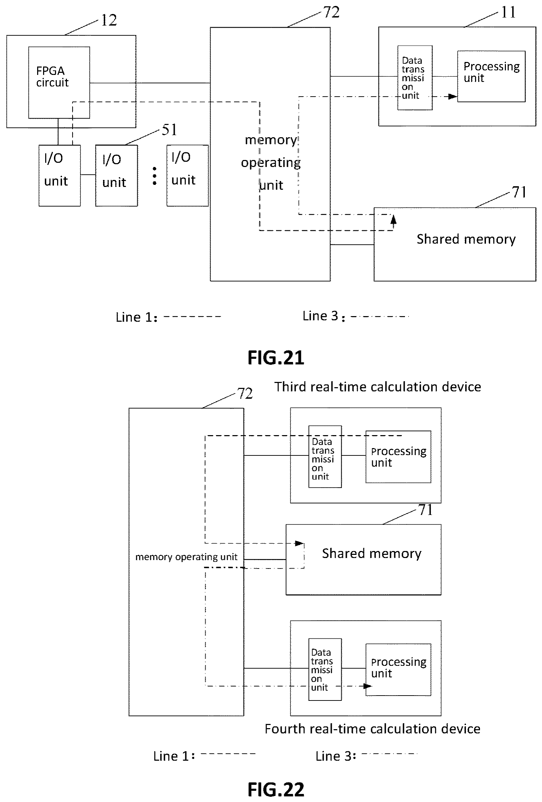

As shown in FIGS.20 and 21, the real-time calculation device 11 includes a data transmission unit and a processing unit, and the I/O processing device 12 includes: an FPGA circuit, and the FPGA circuit is connected to one or more I/O units 1.

In FIG.20, the real-time calculation device 11 shares data to the designated I/O unit connected to the I/O processing device 12, the FPGA circuit in the I/O processing device 12 can realize the functions of the data transmission unit and the processing unit in the I/O processing device 12 in FIG. 16, the specific process is similar to that in FIG. 16 and will not be repeated here.

In FIG. 21, the I/O processing device 12 shares data with the real-time calculation device 11. The FPGA circuit in the I/O processing device 12 can realize the functions of the data transmission unit and the processing unit in the I/O processing device 12 in FIG. 16. The specific process is similar to that in FIG. 17 and will not be repeated here.

As shown in FIG. 22, the third real-time calculation device and the fourth real-time calculation device both include a data transmission unit and a processing unit. When the third real-time calculation device shares data A3 with the fourth real-time calculation device, the processing unit of the first real-time computing generates an operation instruction RA3 for writing the data A3 into the shared memory 71, and sends the operation instruction RA3 to the memory operating unit 72 through the data transmission unit, the memory operating unit 72 executes the operation instruction RA3 to write the data A3 into the shared memory 71, after the data A3 is written into the shared memory 71, if the data A3 needs to be transmitted to the fourth real-time calculation device, the fourth real-time calculation device needs to read the data A2, at this time, the processing unit of the fourth real-time calculation device can generate an operation instruction RdA3 (which may be one or more operation instructions) for reading the data A3, after the processing unit transmits the operation instruction RdA3 to the corresponding data transmission unit, the data transmission unit can transmit the operation instruction RdA3 to the memory operating unit 72, and then, the memory operating unit 72 can read the data A3 from the shared memory 71 to return it to the data transmission unit of the fourth real-time calculation device by executing the operation instruction RdA3, so that the processing unit of the fourth real-time calculation device can acquire the data A3.

In FIG. 22, it is taken as an example that data are shared between two real-time calculation devices, but is not limited to this, based on the similar way, the data to be shared between two I/O units may also be transmitted between two I/O processing devices, which will not be repeated here.

It should be noted that in the test system of the present application, the memory operating unit can be configured as needed to determine whether to send the target data to the designated device for local storage; for example, the memory operating unit only sends the target data shared between at least two real-time calculation devices to the real-time calculation device that needs to use the target data for local storage, and these target data may be data that need to be exchanged among test models running in the real-time calculation device; for the target data that needs to be shared between the real-time calculation device and the I/O processing device, it will not be sent to the I/O processing device for local storage.

In a second embodiment of the present application, a memory operating unit receives an operation instruction from any one of a plurality of devices, the operation instruction is used to write target data into a shared memory or to read at least part of the existing target data in the shared memory, and the memory operating unit executes the operation instruction sent by the device, if the operation instruction is used to write the target data into the shared memory, the operation instruction includes the target data required to be written, and the memory operating unit executes the operation instruction to write the target data included in the operation instruction into the shared memory; if the operation instruction is used to read at least part of the existing target data in the shared memory, the operation instruction includes identification information of the target data required to be read, and the identification information represents the device from which the target data originates, the memory operating unit executes the operation instruction to read the target data corresponding to the identification information in the operation instruction, and feeds the read target data back to the device that sends the operation instruction; or, the operation instruction includes location information (for example, address range) of the target data required to be read in the shared memory, and the memory operating unit executes the operation instruction to read the target data indicated by the location information of the operation instruction in the shared memory, and feeds the read target data back to the device that sends the operation instruction.

In one example, each device in the above-mentioned test system is connected to the memory operating unit through a PCIe bus, that is, the memory operating unit is connected to each device through a PCIe connector, so that each device can map the target data required to be shared to a segment of address in the shared memory, and each device can read data from the shared memory by accessing local memory data, thereby realizing read and write access of each device to the same memory data, and realizing the sharing of the target data among a plurality of devices.

Wherein, the memory operating unit is used as a standard PCIe device, which are capable of converting the operation instructions from the target device in a plurality of devices into a high-speed serial signal, and transmitting the high-speed serial signal representing the operation instruction to the memory operating unit through a high-speed serial bus, the memory operating unit executes the operation instruction to perform read and write operations on the target data in the shared memory.

In an embodiment, the memory operating unit may be implemented using FPGA.

In an embodiment, the memory operating unit may also be implemented using a Memory eXpansion Controller (MXC), and the MXC is a memory controller supporting the Compute Express Link (CXL) protocol.

The preferred embodiments of the present application have been described in detail above, but it should be understood that aspects of the embodiments can be modified if desired to employ aspects, features and concepts from various patents, applications and publications to provide additional embodiments.

These and other changes can be made to the embodiments in view of the above detailed description. In general, in the claims, the terms used should not be considered as limiting to the specific embodiments disclosed in the specification and claims, but should be understood to include all possible embodiments along with all equivalent scopes enjoyed by these claims.

## Claims

1. A test system comprising: at least one I/O unit and a plurality of devices;
the plurality of devices comprise a real-time calculation device and an I/O processing device, the I/O processing device is connected to at least one I/O unit, and the I/O unit is used to be directly or indirectly connected to a DUT;
when testing the DUT, the target data required to be shared among the devices is shared based on writing and reading data into and from a memory by the devices;
the I/O processing device is used to transmit data between the devices and the I/O unit to which the I/O processing device is connected.

2. The test system according to claim 1, wherein the plurality of devices are cascaded in sequence, and the memory comprises: a plurality of target memories, different devices correspond to different target memories;
the device is used to, when receiving an operation request in a first transmission process, if the device needs to perform a target operation on the target memory, write an operation instruction of the target operation into the operation request and transmit the operation request to the device at the next level; the first transmission process refers to a process in which the operation request is transmitted from a first device cascaded among the plurality of devices to a last device in sequence; the target operation includes an operation of writing the target data and/or specified data into the target memory;
the device is used to operate the target memory corresponding to the device based on all operation instructions contained in the operation request when receiving the operation request in a second transmission process, and transmit the operation request to the next device required to be transmitted; the second transmission process refers to: a process in which after the first transmission process, the operation request is transmitted from the last device to the first device in sequence, or: a process in which when the plurality of devices are connected in a closed loop, the operation request is transmitted from the first device to the last device in sequence again;
after the second transmission process is completed, the plurality of target memories keep data synchronization, and data in each of the target memories is used to be read by the corresponding device.

3. The test system according to claim 2, wherein each of the target memories is provided with N storage address segments and N lock spaces corresponding to the N storage address segments one by one, where N is an integer greater than or equal to 1; the specified data includes a first preset value;
a part or all of the plurality of devices are first target devices;
the first target device is used to:
when the target data needs to be written into the target memory, acquire a target storage address segment to which the target data points from the N storage address segments;
write the first preset value into the target lock space in the target memory to try to acquire an operation privilege of the target storage address segment; the target lock space is the lock space corresponding to the target storage address segment among the N lock spaces;
if the first preset value written by the first target device is read from the target lock space of the target memory of the first target device, write at least part of the target data into the target storage address segment of the target memory, so as to allow any device among the plurality of devices read at least part of the target data from the corresponding target memory.

4. The test system according to claim 3, wherein the plurality of devices comprise M devices, where M is an integer greater than 1, and the lock space comprises M flag bits corresponding to the M devices one by one;
when the first target device writes the first preset value into the target lock space in the target memory, the first target device is specifically used to:
write the first preset value into the flag bit corresponding to the first target device in the target lock space of the target memory, wherein at most one flag bit in any of the lock spaces is the first preset value;
when the first target device writes at least part of the target data into the target storage address segment of the target memory, the first target device is specifically used to:
when the first preset value is read from the flag bit corresponding to the first target device in the target lock space of the first target device, write at least part of the target data into the target storage address segment of the target memory.

5. The test system according to claim 2, wherein a part or all of the plurality of devices are second target devices;
the second target device is used to write information to be verified generated according to at least part of information in the operation request into the operation request during the first transmission process;
the device is further used to execute all operation instructions in the operation request during the second transmission process of the operation request;
at least one of the devices including the first device is used to verify the information to be verified in the operation request during the second transmission process.

6. The test system according to claim 5, wherein the second target device is used to generate the information to be verified according to the data in the operation request written into the operation request by the second target device during the first transmission process, and add the information to be verified into the operation request.

7. The test system according to claim 5, wherein when at least one of the devices including the first device verifies the information to be verified in the operation request, it is specifically used to:
for each of the information to be verified in the operation request, based on the at least part of information at the same position as the information to be verified, generate reference verification information corresponding to the information to be verified;
when all the information to be verified in the operation request is the same as the corresponding reference verification information, determine that no transmission error occurs in the operation request;
when any of the information to be verified in the operation request is different from the corresponding reference verification information, determine that a transmission error occurs in the operation request.

8. The test system according to claim 1, wherein the memory comprises: a shared memory, which is connected to a memory operating unit;
the device is used to acquire an operation instruction for operating the shared memory, and send the operation instruction to the memory operating unit;
the memory operating unit is used to exchange the target data corresponding to the operation instruction with the shared memory by executing the received operation instruction.

9. The test system according to claim 8, wherein the device is used to send the operation instructions to the memory operating unit in sequence according to the order in which the operation instructions are acquired.

10. The test system according to claim 9, wherein the memory operating unit is used to execute the received operation instructions in sequence according to the order in which the operation instructions are received.

11. The test system according to claim 8, wherein the target data includes first target data;
a first device among the plurality of devices is used to acquire an operation instruction for performing a first write operation on the shared memory, and send the operation instruction of the first write operation to the memory operating unit; the first write operation is used to write the first target data into the shared memory; the first target data is data that needs to be shared between the first device and a second device among the plurality of devices during the process of testing the DUT;
the second device is used to acquire an operation instruction for performing a first read operation on the shared memory, send the operation instruction of the first read operation to the memory operating unit, and acquire the first target data from the memory operating unit; the first read operation is used to read the first target data from the shared memory.

12. The test system according to claim 8, wherein the target data includes second target data;
a third device among the plurality of devices is used to acquire an operation instruction for performing a second write operation on the shared memory, and send the operation instruction of the second write operation to the memory operating unit; the second write operation is used to write the second target data into the shared memory; the second target data is data that needs to be shared between the third device and a fourth device among the plurality of devices during the process of testing the DUT, and the fourth device is configured with a local memory;
the memory operating unit is further used to store the second target data in a local memory of at least one designated device among the plurality of devices, wherein the at least one designated device includes the fourth device;
the fourth device is used to read at least part of the second target data required for testing from the local memory of the fourth device.

13. The test system according to claim 12, wherein the fourth device is further used to receive the operation instruction or the second target data from the memory operating unit, and cache the target data in the local memory of the fourth device.

14. The test system according to claim 12, wherein the memory operating unit is used to store the second target data in the local memory of the designated device when the second target data meets a preset condition.

15. The test system according to claim 12, wherein the fourth device is used to:
when it is necessary to read designated data required for testing, determine whether to read a specified data from the local memory of the fourth device;
if so, read the specified data from the local memory;
if not, read the specified data from the shared memory through the memory operating unit.

16. The test system according to claim 1, wherein the target data includes third target data shared between the real-time calculation device and the I/O processing device; each of the I/O units or channels in the I/O units corresponds to a different storage address in the memory;
the real-time calculation device is used to write the third target data into the storage address corresponding to the I/O unit or the channel in the I/O unit when needing to share the third target data to the I/O unit or the channel in the I/O unit;
the I/O processing device is used to read the third target data from the memory, and send the third target data to the corresponding I/O unit or the channel in the I/O unit;
the I/O processing device is further used to read the third target data corresponding to the designated I/O unit or the designated channel from the memory and feed it back to the real-time calculation device when the real-time calculation device needs to read the third target data corresponding to the designated I/O unit or the designated channel in the designated I/O unit from the memory.

17. The test system according to claim 1, wherein the test system is a hardware-in-the-loop (HIL) test system.
